# EUROPEAN PATENT APPLICATION

(11) **EP 2 482 175 A1**
(43) Date of publication of application: **01.08.2012**
(21) Application number: 10818417.7
(22) Date of filing: 22.09.2010
(51) Int. Cl.: G06F 3/048

(54) **METHOD AND INTERFACE FOR MAN-MACHINE INTERACTION**

(30) Priority: 23.09.2009 CN 200910176581; 22.04.2010 CN 201010152973
(71) Applicant: Han, DingNan, Beijing 100013 (CN)
(72) Inventor: Han, DingNan, Beijing 100013 (CN)
(74) Representative: Groot Koerkamp, Jasper Henri
(86) International application number: PCT/CN2010/077239
(87) International publication number: WO 2011/035723

(57) **Abstract**

Provided are a mechanism and an interface for man-machine interaction, especially a mechanism and an interface for man-machine interaction applicable to multi-touch. A mode and a method for constructing a graphic interface in the environment of touching operation are provided, thus sufficiently using the advantages of multi-touch devices and inputting more plentiful operation instruction information through less operation. The solution mainly describes how to use multi-touch to provide more plentiful input information and how to express operation commands with more complex structures through less steps, and how to enable the interface to be more smart, to accord with ergonomic and to be more easy to use multiple parts of a hand to operate at the same time.

## Description

### BACKGROUND

Existing multi-touch operation is mainly implemented by complex touch commands, which, however, are difficult to be memorized by the users. As the correlation of touch points is often neglected in existing multi-touch operation, especially when several regions or objects are selected by the touch points, it's imperative to confirm the relations of various objects through various kinds of information so as to perform the complex operation with fewer steps.

### SUMMARY

The present invention relates to an HCl mechanism and interface, and more particularly to a multi-touch HCl system and interface.

The present invention provides a configuration mode and method for graphical interface under a touch-based operating environment, which enables input of more abundant operating commands with less operation by taking full advantages of multi-touch devices. In the present invention, the ways on how to provide more inputs via multi-touch are described, allowing to express the operating commands of more complex structure by fewer steps, and bring about a more intelligent ergonomic interface for easier operation.

### BRIEF DESCRIPTION OF THE DRAWINGS

FIGS. 1~4: some patterns of menu.
FIG. 5: a schematic view of an interface wherein the menu appear/show at a place different from the command given to call the menu.
FIG. 6: a schematic view of touch pen interface.
FIG. 7: a touch command for picking target.
FIG. 8: a touch image of five fingers.
FIG. 9: a touch image.
FIG. 10: two human hands.
FIG. 11: a touch command for using menu.
FIG. 12: patterns of some menus.
FIG. 13: patterns of some icons.
FIG. 14: a pattern of a single icon or menu.
FIG. 15: a schematic view that the icon is pressed by 4 fingers.
FIG. 16: a schematic view showing the pattern of operation by two hands.
FIG. 17: a schematic view that 3 icons among many ones are touched by a finger.
FIG. 18: another schematic view showing the operation by two hands.
FIG. 19: a schematic view of the touch image showing a bent finger of the left hand as well as the right hand.
FIG. 20: a schematic view of an interface showing the touch command editor.
FIG. 21: a schematic view that the user lifts the middle finger to select the corresponding objects.
FIG. 22: a schematic view of Biointerface and sliding selection menu.
FIG. 23: a schematic view that the user puts its thumb under its hand.
FIG. 24: a zoning view of two-handed touch screen.
FIG. 25: a schematic view of a menu.
FIG. 26: a schematic view of interface.
FIG. 27: a schematic view of interface.
FIG. 28: a schematic view of interface.
FIG. 29: a schematic view of interface showing information.
FIG. 30: a schematic view of some menu patterns specific to Biointerface.
FIG. 31: a schematic view of a menu pattern specific to Biointerface.
FIG. 32: a schematic view of some patterns specific to the same Biointerface in different conditions..
FIG. 33: a schematic view of auxiliary cursor and two touch points.
FIG. 34: a schematic view of a Biointerface.
FIG. 35: a schematic view of a Biointerface.
FIG. 36: a schematic view that the palm's touch position is hinted in the Biointerface when some fingers touch the screen.
FIGS. 37~38: schematic views of Biointerface when the palm touches the screen.
FIG. 39: a schematic view of Biointerface.
FIGS. 40, 41, 43, 44: schematic views of Biointerface.
FIG. 42: an external view of a mobile device.

### DESCRIPTION OF PREFERRED EMBODIMENTS

In the present invention, multi-touch screen is considered to be able to input not only the coordinates of multiple touch points but also touch images on a screen. The touch points can also represent a touch region other than some points. For instance, when the palm touches the screen, only touch points are captured if the system can only obtain the information of coordinates, whilst a touch region corresponding to the touch points of the palm is represented if the system can obtain the touch images.

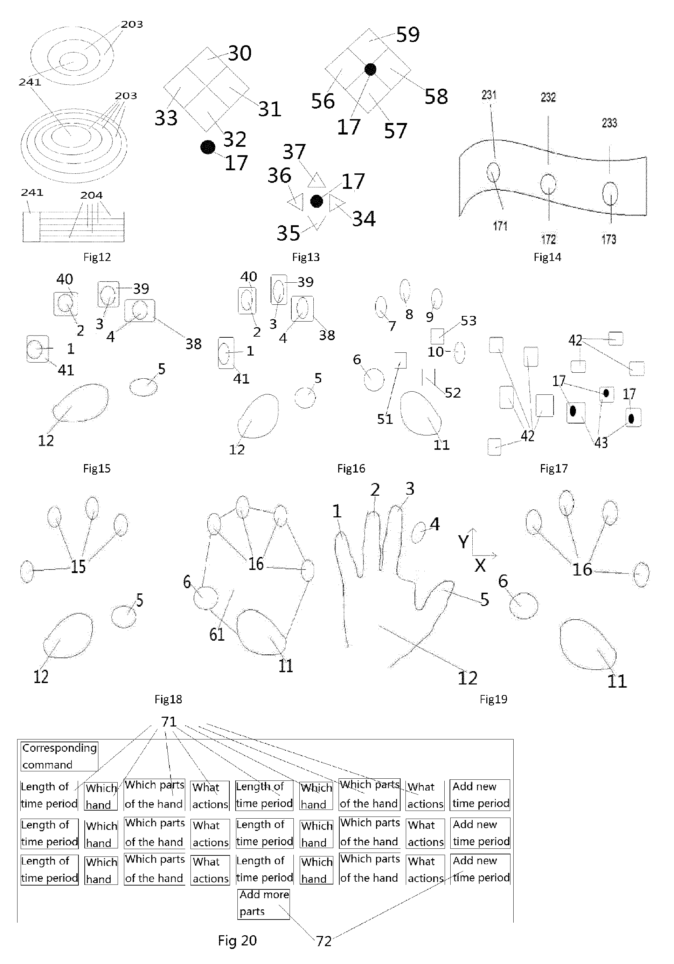

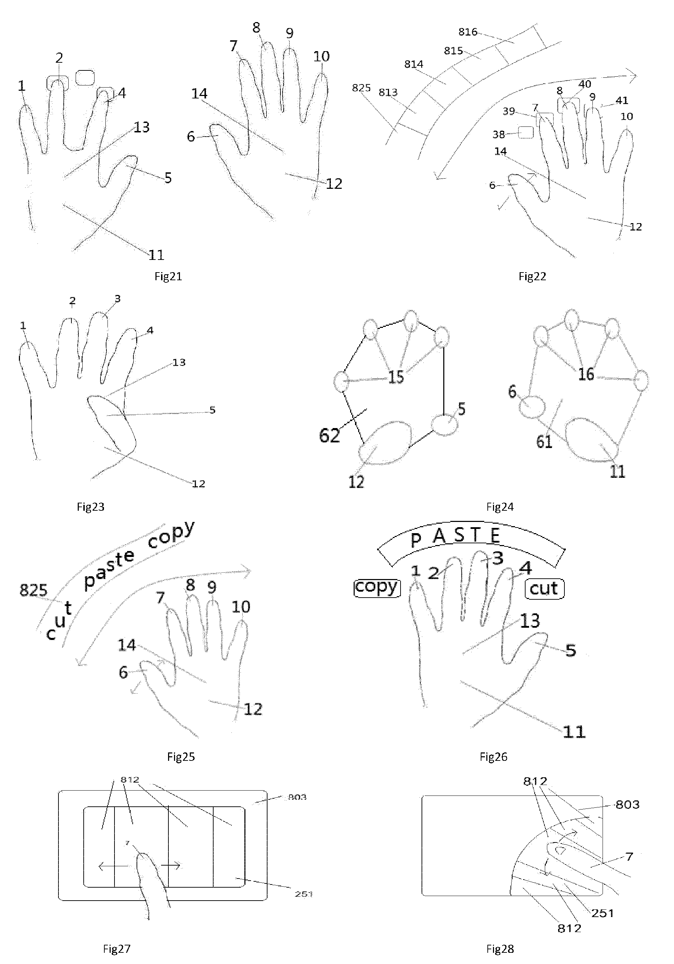

The present invention provides a universal classification method for the body components of the touch screen users and their operating tools; in particular, based on the principle of ergonomics and ease-of-operation, corresponding functions are assigned to the body components of the users and the touch tools, such that the body components of the users (especially two hands) are classified and then provided with corresponding functions and correlations as well as a collaborative structure, thus turning the body components of the users (especially two hands) into universal operating tools. A complete concept of the system and program for two hands is formed through unified setting and definition of two hands. In the event of touch, the system will not just sense the parts detected by the touch device, nor consider the detected parts as separate or fragmented ones to neglect their structures. In the present invention, the system has a concept of hands, so the system knows that the user is using a so-called hand or a hand-shaped operating tool. According to different touch objects from the touch points, e.g.: body components or touch tools, the system could divide the objects or regions acquired from the touch points or touched by the touch points into various groups, and obtain abundant inputs, especially multiple regions or objects on the screen, according to the position relationship between the touch points and components of hands. The system can thus know the shape and structure of hands from manual operation, and then judge the gesture of hands (even if the position without in touch with the screen) through the information obtained by touch detection device, particularly the touch images obtained from multi-touch screen. Referring to FIG. 19, when the user bends a finger, the system could judge it according to the touch image. When the other hand lifts the ring finger and forefinger, the system could also judge it according to the touch image. Such function is very useful to inputs in multi-touch operating modes, e.g.: calling menu, opening program, calling object, and generating or controlling 3D objects according to the touch images. Similarly, this allows to judge which options are selected by the users, e.g.: as illustrated in FIG. 21, if the middle finger of the user's left hand exits the screen, or fails to touch the screen, the system believes the user has selected the corresponding options.

Why could the system judge the gesture of the body components (especially hands) of the users through some information? This is because the structure and shape of the operating tools to be used by the users, and the information obtained by the touch detection device under various gestures, particularly the touch images obtained by the touch screen, are already preset into the system. Such method is also suitable to the touch objects other than hands. In order to judge more accurately the gesture of the user's hands and obtain more abundant operating information and details, some specific data of hands shall be required. For example, the size of everyone's hands and the length of every finger are different. In certain circumstances, it's required to, according to the size of every touch region, the dimensional difference and spacing of every touch region as well as the size of every part of the user's hands, judge more accurately the touch objects and gesture in various regions. The system can identify if two fingers put together are the middle finger and forefinger of the right hand or the middle finger and ring finger of the left hand according to the length difference of fingers. Moreover, the dimension of fingers could be used to identify the identity of an operator, such that the same operation of different operators is defined to accord with various functions. Fundamentally, the user permits the system to intercept and store a certain touch image, and inform the system about the gesture of its body components and the position of body components corresponding to the touch images, or even only inform the system which functions correspond to a certain touch image in certain conditions, so as to resolve the error and insensitivity of identification in some special circumstances. It's understood that, the information obtained by presetting of the touch objects' shape and structure as well as that obtained by touch detection device, particularly the touch images obtained by touch screen, are not limited to hands or even a single hand. Similarly, the system could be preset in a way that two hands are overlapped, and a portion of the forearm specific to either hand is pressed on the corresponding touch image on the screen, or identify the gestures corresponding to the touch images according to the pre-saved touch images and structure of hands. When the user defines the touch information detected by the touch device, such as: touch images, corresponding body components or status and position of touch objects, the touch information such as touch images could be firstly intercepted, then, the virtual body components displayed on the screen could be adjusted by the user to the gestures of the corresponding bodies or touch objects, while the touch objects corresponding to different positions of the touch images are set, or only the respective functions of the touch images are set. It's understood that, it's not a static but a dynamic, continuous process to confirm the gestures of the body components or touch objects through the touch information such as: touch images. Through continuous touch information, such as: touch images, the system could estimate the real-time action of the user's body components. Despite of lack of accuracy sometimes, this could provide the relevant programs with some necessary key information for confirming and performing the operations.

As for the preset body information of the users, the comparative information could be obtained temporarily in certain conditions. For instance, 4 fingers of a user's right hand other than the thumb are put together to rap one or several objects on the screen, the system will record the touch images. When rapping the screen, a "copy" icon is shown under or nearby the user's little finger, a "cut" icon is shown nearby the user's forefinger, and an elongated "paste" icon is shown along the profile of 4 fingers, as illustrated in FIG. 26. Next, if rapping the screen by 3 fingers other than the little finger and thumb, start "copy", if rapping the screen by 3 fingers other than the thumb and forefinger, start "cut", if rapping the screen again by 4 fingers, start "paste"; the fingers are not required to touch the screen simultaneously, for instance, in the process of paste, the middle finger may touch the screen firstly, and then after the position is selected, other fingers may touch the screen for accurate paste. 5 fingers of right hand could be unfolded to rap the screen, so the corresponding objects are arranged and displayed by spreading over the region of 5 fingers. So, the system could confirm which fingers touch the screen in whatever gestures by comparing the touch images obtained in rapping the screen in the first and second time. Some operations may yield impact on the subsequent touch commands, e.g.: after copying a certain object, "paste" occurs when 4 fingers rap the screen at other positions or only in the same window; other operations are actuated when rapping the screen by 4 fingers without "copy".

### Common purposes of various components of fingers.

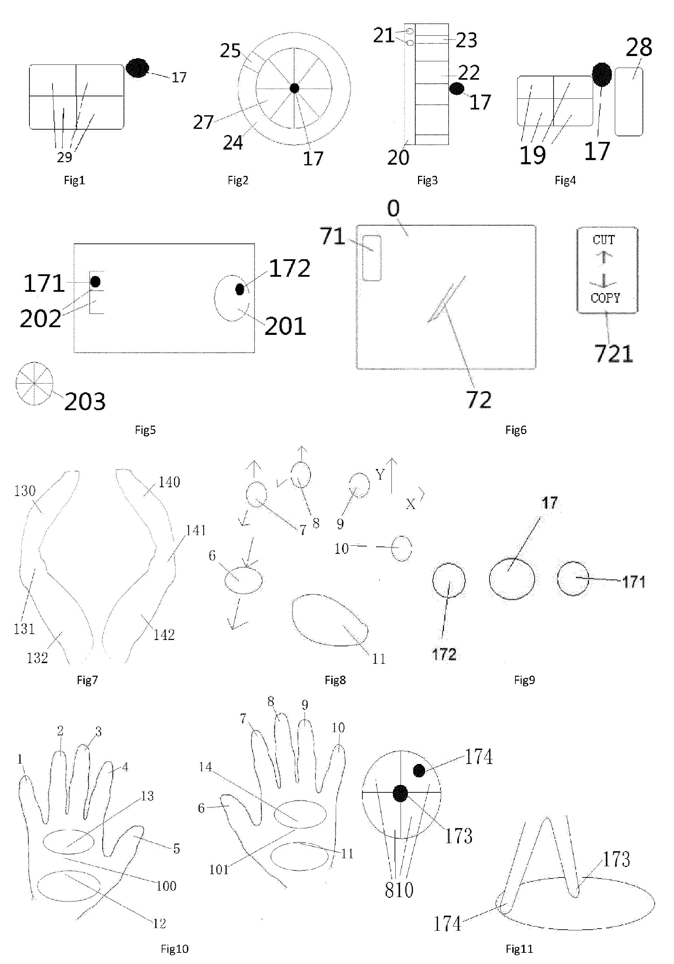

FIG. 10 depict left hand 100 and right hand 101, wherein 1, 2, 3 and 4 are 4 fingers of left hand, 5 is thumb, 12 is palm of left hand and 13 is center of left hand; 6 is thumb of right hand, 7, 8, 9 and 10 are 4 fingers of right hand, 11 is palm and 14 is center of right hand. FIG. 7 depicts left hand finger's lateral surface 130, left hand's lateral surface 131, left hand palm's lateral surface 132, right hand finger's lateral surface 140, right hand's lateral surface 141 and right hand palm's lateral surface 142. According to the system, the user's hands are classified into left and right hands, each of which is divided into 4 fingers and thumb as well as palm, center of palm and lateral surfaces; every finger is divided into 3 sections by the joints, the thumb is divided into 2 sections; both the palm and center of every hand are divided into left and right parts; a hand's lateral surface is also divided into the lateral surfaces of the fingers and palm. The palm, thumb and other fingers could individually slide at any direction, and also rap or press the screen, etc.

In the present invention, the fingers and palm, etc, described hereto (especially the fingers) are referred to a part or all of the fingers, especially the finger tip and entire finger, unless otherwise stated specifically. Different functions can be assigned if touching screen by finger tip and by finger with large area, in particular, sliding one or more fingers on the screen with large area could call menu or window or switch or select contents, etc.

Referring to FIG. 27, the finger 7 slides through screen 803 with large area and calls menu 251, meanwhile the contents of options 812 are switched or selected by continuous sliding. The selected options indicate the options touched by the finger, or options highlighted by the system along the sliding direction with the sliding of the finger. This enables the user to call menu and select corresponding options by a single step, without calling menu or controlling interface in advance. The appearance of menu shall be adjusted according to the gesture and sliding direction of the finger, so the options could be arranged linearly or curvilinearly along the sliding direction of the finger; for instance, referring to FIG. 28, the finger slides along the direction indicated by the arrow, and when the gesture and angle of the finger are shown in the figure, the pattern of menu 251 in FIG. 27 is turned into that in FIG. 28. When the finger slides through or selects the corresponding options, the options shall be zoomed in, enabling the user to watch clearly the contents of the options. In such case, when the user intends to confirm the selection of options by pressing the screen, etc, no switching to other options occurs arising from negligent shift of the finger. With the sliding of the finger, when the system selects the highlighted options along the sliding direction, the slight sliding of the finger shall not switch the system to the next option, thus avoiding misoperation.

Several positions of a hand (e.g.: several fingers or an entire hand) could slide, rotate, rap, touch or press the screen, etc.

If several positions of a hand (e.g.: several fingers or an entire hand) slide, rotate, touch or press the screen, it's possible to call menu or biological control zone or free icon or page; at the same time, with the continuous sliding or rotation of the fingers used to call menu or biological control zone, or with the growing force applied to the screen, it's possible to switch or select the contents in the menu/biological control zone or menu/biological control zone/window. As illustrated in FIG. 22, the user's hand or 4 fingers or the tips of 4 fingers could slide along the arrow until menu 825 occurs, and the fingers continue sliding, allowing to select options 813, 814, 815 and 816. The thumb may touch or not touch the screen; when other fingers slide, the thumb may not move or may slide to other directions, allowing to call different menus 825. The selected options will be highlighted, and those not selected will be shown semitransparently. After selection of options, the user's hand may directly exit the screen, then the functions corresponding to the selected options will be performed. If the user isn't intended to use any option, he/she may continue to slide its finger until no any option is selected. Or, the user may press the screen by different forces so as to use the options selected hereto. When the positions of multiple fingers correspond to multiple options or objects, the selected options may be options unique to a finger of the user. For instance, the middle finger of the user points to different options in sequence, like a watch hand as illustrated in FIG. 25.

Furthermore, the submenu of selected options can also be shown at other positions, e.g.: nearby or under 4 fingers. The options will be shifted along with the user's hands, and kept always at the position accessible by the finger; when a certain option nearby the fingers is selected, the submenu will occur on 825, and subsequent submenu will occur on 38, 39, 40 and 41. The menu may be used in the form of biological control zone or free icon; it can also be set in a way that the options correspond to the adjacent fingers, so the user could use the options by sliding the corresponding fingers, or using the corresponding fingers to press the screen by different forces, for example, pressing continuously the screen or icon twice, or rapping screen or icon to perform the functions of corresponding options by keeping some parts of the hand (e.g.: palm) in touch with the screen, or by lifting or bending a certain finger. According to the setting, it's advisable to bend the fingers while lifting them off the screen, or repeat this process several times to perform the corresponding options. This is because this action is most obvious and easy to operate for the users. Of course, the options can be used by setting to click the corresponding icons. Different options can be used by various operating modes, e.g.: 39, 40 and 41 permit selective use by double-clicking icon, and 38 by single clicking. According to the setting, the options may disappear if all touch points of a hand exit the screen. Or, the options may be shaded after the hand exits the screen, or disappear immediately if clicking other positions. In such case, the user may allow the hands to exit the screen, and select options by touching with hands. If the touch screen with short-range sensing function is used, the menu disappears only when the hands are far away from the screen. This could be taken as an example of Biointerface mentioned hereunder. The other condition is that, different options are shown at 813, 814, 815 and 816 with the sliding of the fingers.

The thumb may slide at different directions or be kept unchanged during sliding of the fingers, in line with various operations, such as: calling different menus.

Exiting of touch point is also an important event, especially when the objects or regions are selected and some operations are already performed. Displacement of touch point for selection of objects or regions can be considered as the end of operation in a phase, then the corresponding system events are triggered, for example: calling options and switching available options. For example, referring to FIG. 15, exiting of palm 12 will lead to change of options 38, 39, 40 and 41 under the finger. FIG. 16 depicts the touch image of two hands, wherein the right hand selects objects 51, 52 and 53; displacement of any part or entire right hand will cause the change of options 38, 39 and 40, or calling of options at other positions or other operations.

Sometimes, the users hope that, even without any operations, such as: pin up menu or lock up options, they could call the body components (e.g.: from Biointerface) or select the body components of the objects (e.g.: fingers), or exit the screen, enabling the fingers to operate freely the objects, especially for calling menu. Yet, in order to provide smooth operating experience, the program shall be designed in a manner that, if specific body components exit the screen, the options and control zones, etc, will disappear directly or cause changes. In such case, 3D touch screen (e.g.: field induction type) capable of sensing touch points away from the screen within a certain range can be used, whilst the system is added with the touch objects specific to the touch points, or the hands for the touch objects don't touch the screen nor exit the screen. If the touch objects (e.g.: fingers) or hands for the touch objects are away from the screen within 1cm, this state is called approaching state, if the touch objects are far away from the screen, this state is called far-away state. In such state, some system events caused by specific touch points far away from the screen will not happen, but some operations requiring the touch objects to touch screen may happen selectively, for example, dragging the touched objects will not happen; some menus, free icons and biological control zones, etc, can be shown only when the corresponding touch points or hands for the touch points touch the screen; but if the system can sense the touch points and hands away from the screen within a certain range, the menus, etc, will be shown. In such case, the users could perform some operations previously requiring to touch the screen by fingers, so they could operate easily the objects (e.g. menus) by just clicking, etc, or allow the objects to disappear immediately or trigger corresponding system events after the hands are far away from the screen.

Similarly, the system shall preset and divide two events including: the touch objects corresponding to the touch points exit the screen and the hands for the touch objects corresponding to the touch points exit the screen.

As for the events that are triggered only when the hands for the touch objects corresponding to the touch points exit the screen, the users could allow the palm to touch the screen so as to prevent triggering of events if the fingers exit the screen, thus enabling the users to lift their fingers freely in operating objects such as menus.

As for many operations (e.g.: multi-touch point operation mentioned hereunder) and many menus, if specific touch points are displaced, e.g.: the touch points for operation purpose exit them, or the touch objects for locking and calling purpose exit the screen, this indicates the end of an operating phase, and the contents of menu will change or disappear, or the system will give various operational options at end of the operation.

### Functions of fingers.

The fingers could select or confirm target objects by pressing, touching or clicking, whilst the system could confirm the position of objects to be selected or confirmed according to the position of fingers; and the finger could also conduct various operations in the sliding control zone or operate free icons, etc, by sliding and rapping at various directions, pressing the screen by different forces, e.g.: giving various commands such as: pressing the screen, approaching to each other, or operating the options. In a multi-touch environment, the position of options and the shape of menus are not fixed, so the fingers could be taken as the positions where the options arise. For example, as illustrated in FIG. 15, options 40, 39 and 38 arise directly under fingers 1, 2, 3 and 4 after occurrence of specific events. While touching screen by fingers is maintained, if pressing the screen by different forces or in different sequences, e.g.: pressing twice continuously or by different forces according to various commands, the system could calculate the average of pressure, of which heavy pressing is deemed if it's bigger than the average, otherwise gentle pressing is deemed. Such operation is called multiple pressing. If corresponding options exist nearby the fingers, the pressure for other fingers will be increased unintentionally when the user selects options by increasing the pressure on the corresponding fingers. In such case, the system could judge that the desired fingers are provided with maximum pressure or with fastest-growing pressure, and the corresponding highlighted options are selected in real-time manner. This is because that, if the user finds the selected options are incorrect, the pressure for various positions shall be adjusted by the highlighted options such that the system could select correct options. Given different forces applied by the fingers of the user, calibration procedure may be used to provide a more accurate insight into the intention of the user. Under different conditions, such as: separating or combining the fingers, touching the screen only by finger tip or by fingers with large area, the system allows the user to touch screen by other fingers while selecting the options by pressing the screen with corresponding fingers. Then, the system records the pressure distribution maps of various parts of the hands with application of force or without selection of any options, etc, which are referenced by the system to judge more accurately the operating intention of the user.

### Thumb.

The thumb of strong characteristics can often be taken as an important reference by which the system could judge which touch points belong to a hand. Also, the thumb can be used as a key point for confirming many operations, e.g.: selection. In many operations, only when the thumb of the same hand touches the screen could the other touch points allow to perform corresponding operations, or the same operations generate different effects. For instance, when the thumb specific to the hand is set to touch the screen, the other fingers could call the objects (e.g.: menus) by the relevant touch commands, or the touch by the thumb permits to call different objects by the same touch command. Also, the thumb can be used to switch the function or mode of the hand at this time, or operate the objects selected by the hand, e.g.: save, activate and group the selected objects. The thumb can be operated in a way to slide and rap transversely and press the screen flexibly. For example, according to the covered selection mode mentioned hereunder, the thumb is used to switch the manual selection of objects by pressing the objects with the touch points or by covering. The thumb can also lock or unlock the selected objects, so that the touch points for the selected objects could maintain selection of the objects after leaving. Also, the thumb can be used to activate the selected free icons, or group the selected free icons into a single one, or save the selected images touched or covered by the hands or add to the cut plate. The thumb can be taken as a symbol, so the other parts of the hands could conduct the same operation to yield different effects if the thumb touches or otherwise doesn't touch the screen. The thumb can also be used to switch options, especially the options of Biointerface. What can be operated by the thumb can also be operated by the fingers.

Palm: the palm is a reference to judge which touch points belong to a hand. The palm could input various touch commands (e.g.: switching options, especially options of Biointerface) to the system by touching the screen, applying different pressures to the screen or to the screen from both sides. Touching screen by palm could also be used to confirm the operating intention of the user and prevent misoperation. For instance, only when the palm, especially the lower edge of the palm approaches the screen could the user select objects by covering gesture or conduct other operations, e.g.: calling certain options. The palm can also be taken as a symbol, and the same operation corresponds to different functions if the palm touches or doesn't touch the screen. Applying different pressures to the screen from both sides of the palm could switch options, e.g.: switching options under the fingers or corresponding to the fingers, especially the options of Biointerface mentioned hereunder, or controlling the gesture of 3D objects for inclination. Selection of a certain region or object often triggers calling menus or free icons or control zones, etc.

Center of palm: the center of palm can be taken as a special touch object when it doesn't touch the screen along with other positions of a hand, since the user seldom touches the screen only by the center of palm unintentionally. Some objects can be set in a manner to be dragged or slidden or shifted only by the center of palm.

Lateral surface of hand: the lateral surface of hand can be used to form a profile or select the contents in the profile or regions. The user can also call options, free icons, programs and control zones by sliding the lateral surface of hand on the screen. In the case of calling by the palm, the contents of objects called by the lateral surface of hand could be confirmed by selection of some objects. For example, the user can select other regions or objects while touching them with other touch points. The same operation by the lateral surface of entire or half of a hand corresponds to different functions, e.g.: calling objects by sliding the lateral surface of hand, calling different objects by the finger's lateral surface, the palm's lateral surface and the entire hand's lateral surface.

Different parts of hand can be set to slide on the screen so as to slide or shift the objects of different levels, e.g.: if one or two fingers slide the pages within the window, and several fingers touch the screen with large area, the window can be dragged by touching the contents of page at any position of the window, rather than touching the frame of the window, so as to save the display area by neglecting its frame. Touching the screen or sliding by the lateral surface of hand or entire palm could switch to the objects of higher level such as: entire desktop or page. For example, the screen only shows a part of the desktop or page, so sliding on the screen by two fingers could show the contents on the screen, the desktop or page at different positions, whilst touching the screen by several fingers with large area or sliding on the screen by the lateral surface of entire palm or hand could switch to different pages or desktop.

According to the position of touch points in relation to the palm and thumb, the system could confirm if they are on the same hand. The spacing among touch points for the same hand shall not exceed a certain distance, and the curve of over 3 touch points shall conform to the profile of the hand.

Palm and thumb are very useful positions like two common function keys. Their operations (e.g.: whether touching screen) are available with various functions:
1, Confirm various operations. Many operations or events could be confirmed or triggered only after the thumb and palm touch the screen or conduct specific operations, e.g.: selecting objects, triggering certain menus or events in the biological control zone, calling menus or biological control zones, making options or menus accessible by the fingers;
2, Lock selection, pin up emerging menus or control zones, prevent possible disappearance of objects (in case of failure to pin up or lock objects) after specific touch points leave specific positions;
3, Provide identification information such that the same operation at other positions yields different effects, e.g.: calling different menus, biological control zones, etc.
4, Activate specific operations like a shortcut key, e.g.: activate the selected free icons.
5, Control the functions of other fingers or touch tools in the same hand. Certain objects only respond to the touch of the fingers specific to the thumb or palm or the touch tools already touched the screen, or may change the functions of other fingers.
6, Switch the contents of options such as menus or biological control zones.

One or several parts of hand can be considered as a special operating tool, so the same operation performed by different parts of hand is matched to different functions. Certain objects can be set to respond to the operations of special operating tools, e.g.: specific parts of hand or touch screen's operating tools or specific operating tool. The touch by different positions of hand or other different operating tools can be taken as a basis for grouping of different objects and for confirming the relations of groups as further described below.

One or several parts of hand may be correlated or considered as a whole, and the hands of touch image can be regarded as different operating tools, e.g.: certain objects only respond to the touch of the fingers specific to the palm of the hand or the touch tools already touched the screen. On the screen, the menus can be called only by sliding of several fingers specific to the palm of hand already touched the screen. For example, the hidden toolbar could be shown only when the window is touched by two fingers specific to the palm of hand already touched the screen, and a single finger can conduct various operations for the contents in the window so as to save the display area. Or, the hidden toolbar could be shown only when two combined fingers touch the window or slide in the window. This is very useful to the mobile device with limited screen size, since it can save the screen area and also prevent the toolbar from sliding out due to error touching by the fingers of the hand holding the device when watching film in full size. Certain objects could be shifted or clicked only by the fingers specific to the palm or touch tools already touched the screen. The functions of fingers specific to the palm of hand or touch tools already touched the screen may change from those of palm without touching the screen, e.g.: sliding of fingers within a sliding zone at different directions correspond to different functions. But, if the palm of hand specific to the fingers touches the screen, sliding of the fingers on the sliding zone may shift the position of the sliding zone. Many options and icons less frequently used can be set to be shown only when the fingers of specific number specific to the palm of hand already touched the screen have touched the corresponding screen(e.g. window), or the functions of specific icon menus could be clicked only by the fingers specific to the palm of hand already touched the screen. When the objects are grouped according to the touch objects of the selected objects, the objects selected by the hand specific to the palm already touched the screen or without touching the screen are divided into different groups.

The system may not perform corresponding operations by judging the gesture of the user's body components based on the touch images, since specific touch images are an input command. For example, referring to FIG. 23, the thumb is pressed under the hand, showing that the touch image of this gesture is taken as a command for calling menus especially Biointerface.

The hand mentioned above isn't restricted, since various parts of the hand in the present invention can be used to perform the operations other than the said functions or operations. The description hereto aims to present the conceptual role of hand in the touching operation.

1, In multi-touch environment, the user could form a profile by the touch images to confirm a region, and then further confirm or select the region and the objects within the region. Confirmation of the region or objects doesn't need to select the region or objects, but only provides the system with the region or objects. That's to say, the system may, when necessary, divide the entire screen and select corresponding objects according to the touch images on the screen. Referring to FIG. 24, if the user puts its fingers to cover the screen, so that the system could acquire and confirm the covered regions 62, 61, the regions and objects therein within the touch range of the fingers 15, 16, thumbs 5, 6 and palms 11, 12; if some contents are to be shown, the program enables display in corresponding regions according to the settings. Sometimes, certain programs will allow to operate confirmed objects in specific regions. For example, corresponding options, or graphic signs (e.g. free icons, options of biological control zone and sliding zone), etc, are shown nearby the fingers or palms, thus guiding various parts of the hand in various operations. Or, when the system has assigned different functions to the fingers, some signs (e.g.: icons) can be shown nearby or under the corresponding fingers, reminding the users of the functions corresponding to a body components this time. Such method can assist the users in operation, but also bring excellent visual experience for them. The corresponding options or signs can also be shown between two fingers, guiding the users to approach two fingers and perform the relevant operations. The corresponding contents or objects can even be set by the program to be shown at specific positions, for example, some contents or objects (e.g.: options, window) can be shown by the forefinger when clicking the touch points of certain object.

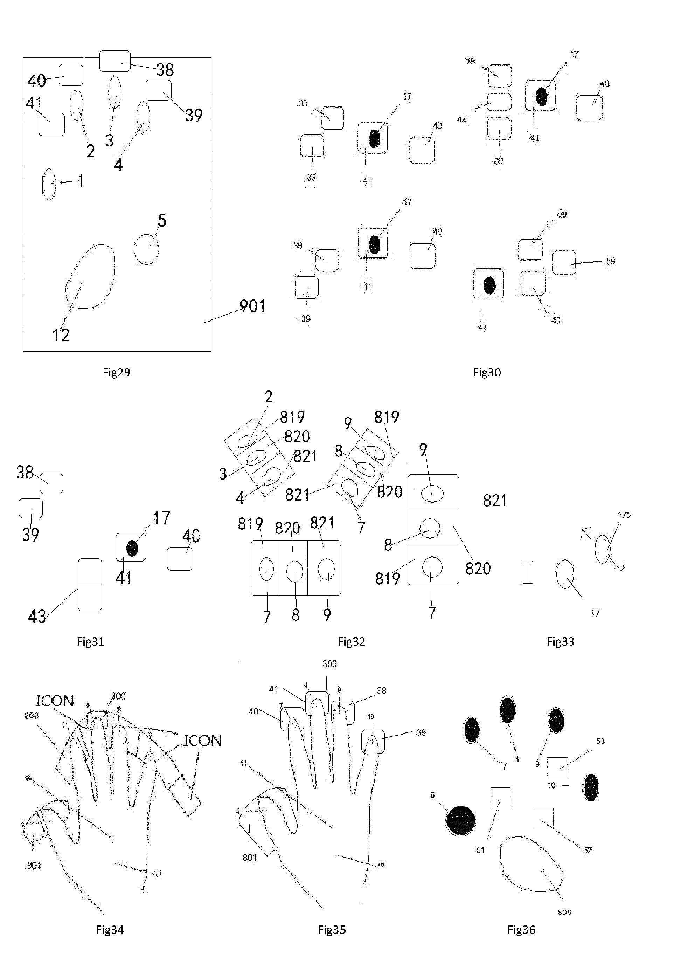

If the user selects or touches a certain object or region, the corresponding information of the object (e.g.: attribute of files or operable options) can be shown nearby the fingers of the user. For instance, if selecting multiple objects by the covering of 61 or 62, the attributes of selected objects or various operable options can be shown nearby or under 15 or 16. If the user puts its left hand on the screen and switch to the mode of multiple cut plate, and select the position of the cut objects or paste by the touch point of the right hand, 62 can be used to show multiple objects within the cut plate this time. For example, if clicking multiple images in sequence by the right hand's touch points, the images are added to the cut plate, then the overlapping status of these images can be shown in 62. Referring to FIG. 29, when the user puts several fingers on photo 901, the attributes or various operable options for the images are shown under other fingers. Referring to FIG. 15, when the user drags a file 39 by the fingers, the attributes 40, 41 of the file are shown under other fingers.

When performing certain operations, the operations only make sense or don't make sense to the selected objects, or are only subject to or not subject to the selected objects. When performing other operations, the operations only make sense or don't make sense to the confirmed objects, or are only subject to or not subject to the confirmed objects. Multi-touch could provide many objects or positions, therefore it's advisable to distinguish the confirmed and selected objects when programming, so as to prevent confusion or overloaden of the system arising from numerous selected objects. For example, when calling the menus, the contents and form of the menus could only be confirmed by the objects selected by special mode or body components. This could be applied to the selected and confirmed objects, and vice versa. Confirmation and selection are represented by two states.
1. Confirm the regions by the profile of regions formed by the touch images.
   FIGS. 8, 10, and 18 describe a mode of dividing regions, where 7, 8, 9 and 10 are 4 fingers of a person, 6 is thumb, 11 is the center of palm. By taking three or more of 6, 7, 8, 9, 10 and 11 as the edge or edge vertex, it's possible to confirm a region or objects in certain regions, such mode is called a covering gesture. Of which, the thumb 6 and palm 11 are set as key touch points, namely, only when either of the thumb 6 or palm 11 or both the thumb 6 and palm 11 touch the screen system, it's believed that the user's ready for picking, and the system will give a corresponding hint, for example, highlighting the picked or to be picked regions or objects. In FIG. 18, region 61 will be selected when 16, 6 and 11 touch the screen.
   FIG. 7 depicts another touch command for confirming a region or objects in certain regions, wherein 131 and 141 represent the sides of both hands. The region between 131 and 141 or objects within the region will be selected. Some dynamic effects could be provided, for example, 131 and 141 is maintained static for a period of time after shifting to the central region for a certain distance, and corresponding operation is activated. Then, the highlighted marking of the position when the palm was actuated is gradually changed to the position when the palm is kept static, indicating that the system confirm the activation. The user could zoom in or out the objects between 131 and 141 by changing the spacing of 131 and 141, or put together the objects between 131 and 141. Suddenly widening the spacing of 131 and 141 can also be used to insert blank pages in the files or push away other objects on the desktop, e.g.: icons or other windows.
   The objects in the regions are also referred to touch objects or touch points, for example, if a certain object (e.g.: mobile memory) is put on the touch screen, which could detect the object's touch image and identify it by other methods (embedded chips), the object could be selected once the region for the object is selected by covering gesture.
2. Select the regions or objects through the regions covered by the touch images of the touch objects. For example, the user could confirm the regions covered by its palm if placing the palm on the screen. Also, this could confirm a region by placing a single or a few fingers on the screen.
3. Confirm the regions or objects by sliding the touch point across the corresponding regions. For example, if pressing and holding the corresponding icon of "highlighted region" by a touch point, and sliding 4 joined fingers across the regions to be highlighted, the corresponding regions will be highlighted more obviously, if sliding 1 finger across the highlighted regions, such highlighting will be removed.
4. Confirm the regions or objects by drawing up the boundary of regions.
5. Confirm the objects by touching the objects.

After confirming the regions, the user could select or lock the confirmed regions by further operations. In certain conditions, the regions will be selected or locked automatically while they're confirmed. Other further operations, e.g.: operation for options arising from selection of objects, or selection of other objects, will also possibly cause the locking of selected objects. Locking aims to enable the user to apply the touch objects (e.g.: hands) for selection of objects into other operations, for example, operating the icons arising from selection of fingers or confirmation of the regions or objects, or further selection of other objects. Locking is possible for further operation after the operating intention of the user is understood by the system. After confirming or selecting objects by covering method, a frequent event is that, corresponding icons, options and sliders, especially biological control zones or free icons mentioned hereunder, will occur nearby the touch points on the screen, particularly nearby or under the body components forming the profile of regions for selection of regions or objects, or even nearby or under the fingers (sometimes including palm). This will guide the user to further operations through the body components, as illustrated by icons of 39, 40 and 38 in FIG. 15; icons of 39, 40 and 38, left hand fingers 1, 2, 3 and 4, and right hand fingers 5, 6, 7, 8 and 9 in FIG. 16. Beside, 51, 52 and 53 are objects selected by the right hand. In such case, icons occur under the fingers other than the finger for confirming the regions. Sometimes, when the user gives a covering gesture, or places some fingers on the screen, it's not intended to select a certain region, but call the corresponding objects especially options (e.g. icons of different functions nearby the fingers).

The user could select an object by holding some touch points, but call menus with other touch points at other positions; the menus disappear with the disappearance of the touch points for selection of objects and operation of menus.

The user could call menus by a finger or palm and other fingers, then touch the screen and lock the selection by the palm, and operate the menus by other fingers. The menus disappear with exiting of the palm.

After selection or confirmation of the objects, the operations could be guided through the movement of body components and graphical interface as described below.

The movements of body components include but not limited to: (in collaboration with FIG. 8)
1. Thumb 6 slides along the arrow direction or conversely. Thumb is a key finger with functions different from other fingers. For example, sliding thumb could be used to lock the selected regions. After the selected regions are locked, the selection state will be maintained even if the touch points for selection of regions exit the regions or the objects within the regions. Or, only after the user slides thumb could the covered regions be confirmed and selected. Thumb can also be used to switch the corresponding icons, options and sliders of other fingers, especially biological control zone or free icons mentioned hereunder.
2. Keep palm in contact with the touch screen, and press the touch screen by different pressures or rap the touch screen.
3. Slide the fingers, e.g. one of fingers 7 or 8 or both of them, along the arrow direction or conversely, or slide along +/- direction of axles x and y.
4. One or multiple fingers (e.g.: one of fingers 7 or 8 or both of them) used for following operations:
   1. Rap the screen,
   2. Press the screen by different pressures without exiting the screen, e.g.: 7 and 8 press the screen simultaneously by different pressures.
5. Keep all touch points for picking without exiting the screen. Rotate around the center of the picking region.
6. Touch the screen by special positions. Referring to FIG. 18, only after 11 contacts the screen could the system allow to pick the region 61 or objects in the region 61.
7. Two fingers approach to each other with corresponding functions. After the user's operation is guided through the graphical interface, the option could be indicated between two fingers of the user, and also marked by an arrow, showing that this option corresponds to two fingers approaching to each other.

The following operations are possible after confirming the regions or positions or objects within the regions.

The above-specified movements of body components include but not limited to:
1. Confirm selection ;
2. Call or switch menus: for instance, switch the contents of menus or call menus by sliding thumb, or applying different forces on the screen by palms 123 or 121;
3. Switch the mode of confirming regions: select to confirm the regions covered by hand or by the touch object by sliding the thumb or palm 11 to keep in touch with the screen;
4. Lock up to keep selection of the regions or objects after displacement of the touch points for selection;
5.Cut the objects within the regions;
6. Call menus or free icons;
7. Perform the preset operations on the selected objects, e.g.: paste on the selected regions, and make up the units within the selected regions during games.

If the fingers pick the objects, referring to FIG. 15, there are free icons under or nearby the fingers, or menus under operation, or multiple operating objects within the selected regions, so the following operations are made possible:
1.Thumb 6 slides along arrow direction or conversely ;
2. Keep palm in contact with the touch screen, press the touch screen by different pressures or rap the touch screen;
3. Slide the fingers, e.g. one of fingers 7 or 8 or both of them, along the arrow direction or conversely, or slide along +/- direction of axles x and y;
4. One of fingers 7 or 8 or both of them 7 used for following operations:
   1. Rap the screen ;
   2. Press the screen by different pressures without exiting the screen, e.g.: 7 and 8 press the screen simultaneously by different pressures;
5. Keep all touch points for picking without exiting the screen. Rotate around the center of the picking region.

These operations are allowed to:
1. Activate/inactivate the operating objects, e.g.: activate free icons for service state/idle state/disappearance;
2. Switch to other menus;
3. Pin up menus or lock up the selected objects, such that they don't disappear or generate other changes even if the fingers exit.

You could select objects by different ways to match various functions or call different menus in subsequent multi-touch point collaborative operations. The exiting of touch points for selection of objects is also taken as an operation, indicating the end of an operating phase to trigger the programs to show corresponding options, and enabling the users to confirm operation or perform further operation.
2.Multi-touch menu:
   1. A kind of menu in collaboration with multi-touch operation

The patterns of menus include but not limited to those in FIGS. 1~4, and the methods for calling menus include but not limited to:
1. Via corresponding icons ;
2.Menus occur automatically after picking one or multiple objects or occurrence of certain event ;
3. Via corresponding touch commands ;

For example, if one or several fingers of a hand are held unchanged, other fingers slide or rap or press the screen by different forces. Referring to FIG. 8, 7, 8, 9 and 10 are 4 fingers, 6 is thumb, 11 is the touch region of the palm and screen. The user could use one or several of fingers 7, 8, 9 and 10 to touch the screen and hold unchanged, one or several fingers click or slide or don't exit the screen, but press the screen to call menus by different pressures; the touch command for calling menus isn't complex, since the user has to call menus quickly; for example, 6, 9 and 10 in FIG. 8 are held unchanged, 7 and 8 slide, or 7, 8, 9 and 10 are held unchanged, but 6 slides out to call menus. Such operations are natural, since it's very difficult to move the little finger individually.

Furthermore, the above-specified touch commands could be set to be performed only when certain body component, e.g.: palm 11, is detected by the screen. This could avoid any impact on the operating experience arising from delay setting due to error touch. Also, calling menus on the picked objects or regions could be set to be performed only when 16, 11 and 6 touch the screen.

The touch commands for calling menus include but not limited to: referring to FIG. 9, 17, 171 and 172 are 3 fingers of the user or touch tools, of which 17 keeps in touch with the touch screen, 171 and 172 are combined to rap the screen; different combinations correspond to different menus, e.g.: while keeping 17 in touch with the screen, 171 clicks the screen once or twice, or slides on the screen at any direction, or 172 clicks the screen once or twice, or slides on the screen at any direction. Or, one or more of 17, 171 and 172 always keep in touch with the screen, but press the screen by different forces.

Alternatively, calling menus or switching interfaces could be performed through one or more fingers or finger tips, e.g.: 3 fingers touch the screen or slide on the screen simultaneously, or one fingers touches the screen or slides on the screen with large area, or one or more fingers of a hand slide on the screen while other fingers touch the screen.

When calling menus or controlling interfaces by sliding, it's also possible to switch the contents of menus or select options by continuous sliding, such that calling menus and selection of options could be finished at one step. Also, biological control interface mentioned hereunder (shown in FIG. 22) could be combined to select the primary menus by sliding, and the secondary contents of menus occur nearby or under the hand, or correspond to the corresponding parts of the hand, especially the fingers, or correspond to the positions accessible by the hand. So, the user could manually touch the screen to finish all operations without exiting the screen.

The touch commands for calling menus can also be used as the touch commands for picking targets, in other words, the targets are picked while calling menus; fingers 7, 8, 9 and 10, plus thumb 6 and palm 11, are considered as a picking region at the top or edge, allowing to pick one or more objects or regions in the picking region.

The operations performed by menus include but not limited to:
1. Slide menus to show other icons;
2. Pick icons on menus, and rap icons on menus to activate corresponding functions ;
3. Press icons on menus and then control corresponding functions by pressure sensing function;
4. Enable press or multiple press of icons to use them ;
5. Hold icons to drag them out of the menus, so as to open up sub-menus corresponding to the icons, or create a shortcut mode;
6. Drag other icons to add into the menus;
7. The size of menus could be adjusted according to the number of icons to be shown at one time and the size of every icon; the size of menus and every icon could be set by the users or automatically ;
8. If too many icons on the menus cannot be shown at one time, the menus could decide the position of icons according to the operating frequency of icons, or form a common list, so icons on the common list could be shown on priority under default conditions;
9. Menus of different versions could be switched by clicking labels on the menus or by sliding on icons of menus, or by sliding on specific position of menus. Referring to FIG. 3, 20 is menu's sliding zone, if sliding icons along direction Y on the sliding zone, the icons move along direction Y to the edge of menus until disappearance; if sliding icons along axle x, all icons will be switched. For example, if icons for "review" are to be shown, these icons will be turned into those for adjusting the fonts after switching. 21 is a label, allowing to click and switch the contents of different menus, e.g.: "review" and "page layout", which is very useful for the layout of menus. Sliding zone mustn't be put together with icon display area, and could be separated for operation by both hands ;
10. The menus allow to set specific sliding zone, and consider sliding on corresponding icons as adjusting the functions of icons, e.g.: increasing or reducing the volume, brightness, width of images and height of 3D images. Referring to FIG. 6, the menus allow to set a menu control zone, so as to provide options for setting menus, for example: 1. pin up menus, permitting the menus not to disappear even if all fingers for the menus exit ; 2. increase the width of menus while showing more icons. If there isn't specific setting required to pin up menus, the menus will disappear after the touch points for calling the menus exit menus or the screen, or disappear automatically after all touch points exit the menus, this could provide a smooth operating experience for the users ;
11. The icons of menus accessible by the users will become bigger than those in other positions, e.g.: option 22 in the middle of FIG. 3 is bigger than 23;
12. The menus are not required to occur at the operating position for calling menus. The operating position for calling menus and the position where menus occur are located at both ends of the centerline of the screen for easy operation by both hands.

FIGS. 1~4 depict some patterns available for menus.

FIG. 1 is a basic menu, wherein 17 represents one or several fingers or touch objects for calling menus, 29 represents multiple options of the menu suitable for simple operation; sliding fingers on the icon along axle x or y corresponds to switching new icons, or adjusting the corresponding functions of icons, or dragging icons out of the menus to create shortcut mode. Pressing icons can also adjust the corresponding functions of icons, e.g.: holding the icon for increasing brightness.

In FIG. 2, 24 is a sliding zone, and 25 is a menu control zone for controlling menus, for example: pinning up the menu such that the menu will not disappear when the fingers exit or the position of icons on the menu could be adjusted, for example, after icons on the menu are permitted to move, you may drag the icons to change their position on the menu. 27 represents options of menu; sliding on 27 by adopting the center of menu as its center could adjust the corresponding functions of options, e.g.: brightness, it can be set in a way that the brightness is increased clockwise, or reduced counter-clockwise. Sliding icons out of the menu along the radius direction is to drag icons out of the menu to create a shortcut mode, otherwise add icons on the menu.

FIG. 3 depicts a listed menu, wherein the options shall become bigger when sliding touch points across them; this enables the users to watch more clearly the contents of options or show details of the options; on the other hand, this could avoid sliding to next option for misoperation once the user moves slightly the touch point. After zooming in an option, the size of option could be maintained after the touch point exits, since the users may click this option and a bigger area is helpful to click correctly this option. If, in order to show more options, it's set in a way that the option is zoomed out or resumed to normal size after the touch point exits, the touch point can be set not to exit the option, allowing to select option by multiple press, e.g.: pressing the option twice by bigger pressures to activate the option.

In FIG. 4, 28 is a sliding zone, onto which sliding touch point could switch the contents of the menu, 19 represents options, 17 is a touch point, and 18 is a menu.

In FIG. 12, 203 represents options; sliding the touch point (e.g.: finger) on 203 clockwise or counter-clockwise could activate the corresponding functions or increase/decrease the relevant parameters, e.g.: brightness and height of images. Sliding the touch point on 204 along direction y could adjust the relevant parameters or activate the corresponding functions. Sliding the touch point transversely makes no sense; this could avoid misoperation arising from sliding of the touch point across different options. Such menu is suitable when the user holds the screen.

Referring to FIG. 30, 17 is a touch point of the user's finger, 40 is a certain icon or object, 38, 39, 41 and 42 are icons of multiple options; the possible positions of 38, 39 and 40 are shown in the figure, wherein 38, 39 and 42 will occur at positions accessible by other fingers of the hand in 17; if the system permits to drag the object by middle finger of the right hand according to the presetting of the user (e.g.: user's setting), 38, 39 and 40 will occur at the positions accessible by the forefinger and thumb; the user could also preset the positions of 38, 39 and 40 in relation to 17 in specific setting programs, enabling the operation by other fingers when 17 doesn't exit 41. For example, when the user touches or drags an object (e.g.: a file) by the middle finger of its right hand, the options such as "copy", "delete" and "cut", will be shown nearby the object or the positions accessible by other fingers of the hand other than the fingers touching the object, so the user could operate by other fingers of its right hand when the fingers touching the object 40 don't exit the object. The relative position of 38, 39, 41, 42 and 17 is held unchanged; 38, 39, 41 and 42 will move with 17 when 17 drags 40. The pattern in bottom left corner of FIG. 30 is suitable for the operation when 17 is right hand's forefinger, and others suitable for the operation when 17 is right hand's middle finger. When the positions of several fingers correspond to different objects and the system could only select a few among them, the system may select on priority the objects of specific finger according to the presetting of the user, e.g.: middle finger, and then forefinger. 38 and 39 can also be shown a little far away from 40, as shown in FIG. 31, wherein the user selects the icons by sliding other fingers of 17, and the system guides the user's operation by highlighting 38 and 39. For example, the user touches object 40 by its right hand's middle finger, and then touches the screen by forefinger, subsequently icons 38 and 39 will occur on the screen; the user slides finger rightwards, 38 will be selected and highlighted; if the user doesn't want to select 38, he/she may slides finger leftwards, 38 will be removed, and 39 will be selected and highlighted; the corresponding operations of 39 will be performed if the user lifts its finger or issues other touch commands when 39 is highlighted. If the user continues to slide leftwards or downwards, the highlighted 38 and 39 will be removed, indicating the user doesn't select any icon. In this way, the user could watch clearly the hint of the system without being blocked by the fingers. Referring to FIG. 31, the system can also show a region 43, giving a hint to the user for sliding fingers on it to operate 38 and 39, and preventing the user from mistaking for selecting 38 and 39 by clicking them. Moreover, 43 can be divided into two parts correspondingly to 38 and 39, so the user could select 38 and 39 by touching the relevant parts without being blocked by the fingers. This can be taken as an example of biological control interface mentioned hereunder. When the fingers keep in touch with the screen and slide on the screen, the easy-to-touch range is bigger than the easy-to-click range by fingers.

After calling menus, the fingers for calling menus continue to press the screen, and other fingers conduct operation on the called menus. The menus mustn't occur at the operating position of calling menus. The position of menus can be set by the user, and fixed at a certain region on the screen, e.g.: top left of the screen, or the software could also enable real-time setting according to the position of the user's hand and operating tool (e.g.: stylus pen) as well as the touch images and user's habit. For example, after the right hand is set into the system as an operating habit by the user, the control zone is always located nearby the fingers at left end of the operating tool in touch with the screen. Or, when calling menus occurs at one side of the screen, the menus occurs at the other side of the centerline of the screen, especially nearby an idle finger at the other side. For example, when the user intends to see a movie by holding both sides of a device, the thumb of a hand calls the menu based on multiple press clicking, and the thumb of the other hand can slide the sliding zone of the menu, such that the thumb is put on the chart of corresponding volume, and then the volume is adjusted by sliding the thumb. The system can also confirm the position of menus according to the number of fingers at various regions of the screen. The system can identify the left and right sides by gravity sensor. Of course, menus may occur at the position for calling menus.

The position of menus may be subject to the system's judgement about the position of the user's hands for easier operation. For example, in FIG. 1, if the palm of the hand or other fingers for 17 are detected simultaneously by the screen, the system could judge the position accessible by other fingers of the hands for 17 and then confirm if 29 is under or above 17, or at left or right side of 17. For example, when calling menus, another finger 172 of the user also touches the screen, the menu will confirm the position of 29 according to the relative position and distance of 172 and 17; this is because the user usually calls menus by flexible fingers and 17 while 17 keeps in touch with the screen. The arrangement, shape and size of 29 an also be adjusted according to the user's hands, for example, single-row or double-row options. In FIG. 30, the positions of 38, 39, 40 and 42 could also be confirmed according to the positions accessible by other fingers of the user's hands for 17. If the system judges that the user's hands are very small according to the touch image and pressure of the fingers or palm, the options likely become smaller, in order to prevent the user's failure of reaching the distant options when 17 doesn't exit the screen. The system can judge that the user's hands are very small if finding out that the touch pressure is big enough, but the touch image (e.g. of the palm and lateral surface of the hand) is still very small. Also, the system permits the hands to spread out on the screen for detection, and then records the size of the user's hands. In Biointerface, the system knows that the size of the user's hands plays a big role in confirming the size and position of icons as well as their arrangement.

Referring to FIG. 5, 171 represents one or more fingers of left hand, and 172 represents one or multiple fingers of right hand.

202 is a control zone or sliding zone of menu 201. The user calls menu 201 by 171, and controls 201 by 172, of which 201 can adopt similar functions and patterns of menu in FIG. 2, or similar patterns in FIG. 12. 202 can be adopted or abandoned, with its aim of zooming in 201 and switching icons on 201. Sliding along axles x and y is set to correspond to these two functions.

The pattern in 5 is very suitable for operating the screen when holding the device with two hands, e.g., adjusting the brightness and contrast with 201 when seeing a movie.

FIG. 11 depicts a touch command for calling and using menus, of Which 173 represents one or more fingers combined together; rap the screen by 173 or press and hold the screen for a certain period by a pressure bigger than certain value, or press the screen by different pressures, then call the menu, 173 is held unchanged; 174 is used to operate the menu by sliding around 173 on the menu, so this could rotate the menu, and icons 810 at other positions are rotated under 174.

Referring to FIGS. 1-4, 11, 30 and 31, the menus are suitable for the user to operate by other fingers of the hand for 17 while keeping 17 in touch with the screen.

The menus can disappear automatically in following circumstances:
Circumstance A: the menus disappear when the touch points calling menus disappear;
Circumstance B: the menus disappear when the touch points calling menus disappear while there are no touch points on the menus ;
Circumstance C: the menus disappear after operation of the menus until defined times.

The menus can also be set to fade out until disappearance after conforming to the conditions of menu disappearance. If the user clicks other positions, the menus disappear immediately. If the user touches the menus when they fade out, the menus will become distinct again, so the user could lift its fingers or touch tools for more flexible operation after calling menus. The above-specified mode of disappearance is also suitable for biological control zone and free icons.

The menus referred hereto mustn't be operated by multi-touch, since the user could also call and operate menus by single-touch, namely, the menus will not disappear when the touch points calling menus exit the screen, and there are no touch points on the menus. As shown in FIG. 5 for the menus operated by two hands, the user may hold the device to see a movie in full screen by touching the screen with a touch point of the left hand, then the hidden option bars will appear; if the user clicks the option of "adjust images", the secondary menu will appear at right side of the screen, so the user could operate by using right hand .

A pattern of menus or icons. Referring to FIG. 14, there are multiple options 231, 232 and 233, permitting simultaneous operation by multiple fingers; once touching the menu by a finger, the options will be zoomed in for operation by multiple fingers. If other fingers of the same hand touch the screen simultaneously, the options will be automatically aligned to various fingers. During operation, the menu will be twisted along with the sliding of the fingers like a soft ribbon, so such menu is called as ribbon menu. It can be considered as an example of Biointerface mentioned hereunder.

Icon container: the user could form a menu or icon through specific operation, e.g.: by putting some frequently-used icons into a special icon container and making them shift together. Or, the user could rename it and define its appearance. After it's activated, the pattern shown in FIG. 14 can be adopted; the size and spacing of 231, 231 and 233 could be adjusted according to the spacing of the user's fingers, and its own shape could also be regulated so that every option occurs under every touch point.
The icon container also allows to release multiple icons in the form of Biointerface or free icons, and the icons occur at positions accessible by the user's fingers, or directly under or nearby different fingers.

A menu suitable for multi-touch. When it's used, e.g.: clicked or slidden by the touch point, the corresponding option will occur nearby or under other fingers of the same hand clicking it. Furthermore, options can be set to appear nearby or under the closest touch points at both sides of the fingers clicking it.

Furthermore, various options can correspond individually to different fingers, so the fingers could use the corresponding options by sliding at different directions and applying different pressures to the screen. The pattern of free icons can be referenced by options.

### 3. Free icons:

Free icons can always exist on the screen or within a certain window, or multiple icons are shown on the screen or within a window after the user conducts an operation; to enhance the visual effect, icons may fly off from a certain region, e.g.: on a picked operating object, or emerge gradually from a certain region. After icons are activated, the user could control the relevant functions by shifting icons at any direction, or by pressing and rapping with different pressures. Icons on the screen are permitted to be mobile or unchanged. Icons can be viewed as protruding out of the screen surface, and the touch points could drive the icons by touching their edges, as in the case you shift the glass blocks on a glass plate. The user could push multiple icons by hands, or gather icons interfering with operation and push aside. Free icons can also be located in a certain region, like many small glass blocks placed in a container.

FIG. 17 illustrates a schematic view that multiple free icons exist on the operating interface, and the fingers touch 3 of them. Of which, 42 represents icons, 17 represents fingers, and 43 are icons touched.

The user could call the menus by the following methods, including but not limited to:
1. By using specific icons;
2. By using corresponding touch commands on a certain region or object, e.g.: the touch commands for calling menus can also be used to call icons ;
3. By picking a region or object to conduct corresponding operation at another position, e.g.: touching command or clicking other icons, or picking another object to call relevant icons ;
4. Icons appear automatically after picking one or multiple objects ;
5. Conduct corresponding operation after picking one more multiple objects, e.g.: touching command or touching the screen by one or multiple fingers and hold until icons appear. Or call icons by other methods. The methods for calling icons are also suitable for calling menus or other objects, or even opening a program. The methods for calling menus are also suitable for calling icons.

Free icons allow to select their positions for easier operation by the user according to the distribution of touch points on the screen, the functions of various touch points, current operations, as well as layout of desktop or window on the screen. For example, free icon could select to occur nearby the touch points for calling free icons or nearby or under specific touch points of idle touch screen. Free icons shall occur at wide regions without other functional options or control zones nearby.

The user could activate the intended icons, then use the corresponding functions by multiple press or shift of icons in various directions, etc. The icons can be used to adjust the size of certain parameters, e.g.: operating the icons while picking another region; the icons can be used to adjust the color of picking region. if pick a 2D or 3D image while operating the icons, shifting the icons could adjust its shape, the height on axles X/Y/Z, and the angle formed with axles X/Y/Z or other objects, etc.

If activating icons, you may start to use the corresponding functions of icons.

### Patterns of icons:

When the fingers touch unactivated icons, the icon could:
1. Become bigger ;
2. Show the pattern after activation ;
3. Show the detailed information about the functions of icons.

After icons are activated, one or more effects could be generated, including but not limited to:
1. Become bigger ;
2. Show more hints; suggestive marks occur at front end of the fingers pressing icons, telling the user the corresponding functions if shifting icons on positive and negative directions of axles x, y, z.
3. Split icons into several ones. If the user activates an icon, sub-icons occur under or nearby fingers 2, 3 in touch with the screen, allowing to adjust relevant functions by shifting fingers 2, 3.
4. Shift icons, slide touch points on the icons or nearby the icons or click icons , or apply different pressures to the icons, etc, which are considered as functional operation for the icons.
5. Show icons around the corresponding touch points or fingers, with the patterns of icons shown in FIG. 13.

Referring to FIG. 13, 17 represents the touch points formed by one or multiple fingers or other touch objects, 30, 31, 32, 33, 34, 35, 36, 37, 56, 57, 58 and 59 represent functions giving hints to the user to shift icons at various directions or slide the fingers or touch points corresponding to the icons. For example, 33 is "cut", 31 is "copy" and 30 is "paste". The user could select or use corresponding functions by sliding the touch points or icons or fingers to the corresponding directions. To avoid misoperation, the operation is set to be performed only after touch point 17 exit the screen. For example, if the user slides finger 17 rightwards, 34 will be highlighted, and the corresponding functions of mark 34 are selected. In such case, the functions are confirmed by multiple press or lifting 17, etc, or the highlighted 34 is removed by sliding leftwards. The icons could move along with the fingers, but keep their position in relation to the fingers; after the fingers exit the screen and reapproach the screen, the icons allow to adjust their position, so as to ensure that their position in relation to the fingers is the same as that before the finger exit the screen.

If shifting towards corresponding directions to adjust certain parameters, the value of the adjusted parameters at this time can also be shown simultaneously on 30, 31, 32, 33, 34, 35, 36 and 37. They are subject to real-time change with the operation of the user like the menus; if the user selects a certain option, the secondary option will be shown. The colors from 30 to 37 can also be changed, indicating qualitatively the pressure of fingers or the value of certain parameter.

The activated icons can also be further split after implementation of certain operations, e.g.: after the icons are activated, some hints for further operations of the icons are shown, or the icons are in activated state once occurrence, so the user could enable further splitting through operation of corresponding icons.

The icons can be in activated state once occurrence.

For example, if the picks a region or object, the activated icons occur under or nearby 5 fingers; in such case, the icons can also be considered as a special form of menus. For example, after the user has activated "display" icon, four icons including: adjustment of saturation, brightness, hue error and contrast, occur under some fingers in touch with the screen, of which the hue error gives a hint to the user to shift towards the icons or corresponding fingers for utilization of icons; after the user shifts downwards the hue error icon, the icons under three fingers are turned to red, green and yellow for adjustment.

The icons may occur under and nearby the fingers.

The icons can be activated by the following methods, including but not limited to:
1. The icons are activated if they are set to be pressed by the touch points; shifting icons could be performed only by touching the edge of icons.
2. Specific touch region and operating region could be set on icons, of which touching the touch region could shift the icons, and touching the operating region could start to use the icons.
3. Specific operating region could be set; the icons are activated after being shifted into the operating region.
4. The icons could be activated by specific touch commands, especially by the thumb of finger picking icons; the "thumb" could activate icons through image identification, e.g.: by identifying if the palm of finger selecting icons has pressed the screen.
5. The icons could be activated by multiple press.
6. Different pressures could be applied to the icons when shifting and operating the icons, e.g.: when using the icons by sliding fingers, unlike the way of dragging the icons to other positions.
7. When two or more icons are pressed by the fingers, the icons are activated. In such case, a special icon for activation is required, so that the icon is activated, when necessary, to use a single icon.
8. A special icon can be set; when this icon and other icons are pressed by the fingers, the pressed icons are activated.
9. The user could select icons by covering gesture; after activation, the icons will occur automatically at easy-to-operate positions under or nearby the user's fingers, e.g. in the form of Biointerface.
10. The user could select the intended icons by the aforementioned method and conduct corresponding operations, e.g.: if sliding the thumb of hand for the fingers selecting the icons, the icons are arranged automatically, e.g.: to occur at easy-to-operate positions nearby or under the fingers or spread out for easier operation by the user.
11. The icons could be activated by clicking the icons.

When the user doesn't need to use the icons continuously, the icons may disappear by proper operation.
1. For example, if the called icons are used to adjust the screen's brightness, etc, the icons will disappear automatically once the touch points for operation of the icons disappear after utilization of the icons.
2. Specific touch commands could be used, e.g.: touching the screen by a hand of the user, shifting transversely the hand, and lifting it gradually until the hand's lateral surface touch the screen, looking like to clear away the icons from the screen. Also, the palm's lateral surface could shift transversely on the screen, so as to make the icons disappear or switch new icons. To avoid misoperation, the touch command is set to be used only when the palm's movement velocity is higher than a certain value. Such operation can also be used for the disappearance of the biological control zone and menus, etc.
3. If the icons are used to operate the selected regions, the icons disappear automatically when the selection is canceled.
4. A special region can also be set, so icons may disappear once entering into the region.
4. Icon container
   The user could add multiple objects, especially functional icons to form an icon container; when this icon container is used, other icons contained therein may occur, e.g.: multiple icons are released in the form of Biointerface or free icons for easy touch.
5. Biointerface:
   Biointerface is a form of interface, represented possibly a slider, some icons, windows and free icon.

Biointerface is specifically designed for multi-touch environment, by taking full advantage of the capability of multi-touch screen in providing multiple positions and touch images, and the capability of the system in analyzing the body components according to touch images. Meanwhile, since the user is learnt to operate by hands, the system could, according to the touch position, confirm the easy-to-touch positions for other parts of the hand (e.g.: fingers or palm) for the touch objects corresponding to the touch points . The system could, according to the acquired information, confirm the pattern of interface, e.g. position of windows, pattern of control zone, pattern and arrangement position of icons, or guide the user to shift the touch points for easier operation through the graphical interface.

The purpose of Biointerface is to enable the user to operate multiple icons without shifting hands in a broad range. The icons may occur at easy-to-operate positions under or nearby a hand's fingers and palm; corresponding parts of the hand may slide to press, etc, without touching the icons; this could correspond to the easy-to-operate positions or regions under or nearby the fingers or below the lower flange of the palm; or correspond to the objects (e.g.: icons, slider, touch points) on the easy-to-operate regions or positions under or nearby the fingers. For example, 38 and 39 correspond to 43 in FIG. 31.

The changes from FIGS. 1 to 4, 11, 12, 15, 16, 22, 30, 31 and 27 in relation to FIG. 28, are considered as an example of Biointerface.

The user may, according to its own operating habit, preset the positions of icons (e.g.: options and sliding zone) in relation to the palm, thumb or touch points for easier operation.

One important role of Biointerface is to guide the operation of the user through graphical interface. In some cases, especially when the icons occur under the fingers or correspondingly to certain parts of the fingers or hands, the icon shown in Biointerface is only an icon, not allowing to perform relevant functions by touching the icon. In other cases, traditional icons are provided by Biointerface, enabling various operations by touching the corresponding icons.

Biointerface is available with one or more characteristics as detailed below:

1, The system could, according to the position of one or multiple touch points in combination with the touch points' touch images and presettings, confirm the easy-to-touch positions or regions for other parts of the hand (e.g.: fingers or palm) for the touch objects corresponding to the touch points. The icons and slider, etc, will exist directly at or shift to the corresponding regions or positions, or accord with the profile of the corresponding regions or positions for easier manual operation by the user. For example, the shape of control interface may be arced, or the options are arranged by a certain curvature, with the curvature conforming to the profile formed by the easy-to-operate region for the finger tip while keeping the palm unchanged.

In the occurrence of the interface, other fingers are not required to touch the screen, since the system doesn't need to know the position of other touch points, but confirm the position of icons according to the principle that other fingers of the hand for the corresponding touch points or corresponding body components can naturally touch the icons while the touch points keep in touch with the objects (especially without shift); if the system judges that the touch point is a single finger, it could confirm the shape of control interface or the arrangement of options according to the default setting or the presetting of the user, (e.g.: the user selects objects by its right hand's middle finger or forefinger), or confirm the pattern and position of the icons according to the preset pattern of the icons and the position of icons in relation to the corresponding touch points or body components.

Referring to FIG. 34, the user's finger 8 touches an icon 300, then an arced control zone 800 appears, and multiple icons are shown on 800; 800 could be operated by sliding the fingers, or by clicking or pressing. In another case as shown in FIG. 35, the user clicks icon 300 by hand, then multiple gradient icons 38, 39, 40 and 41 appear. When the user touches the screen by using middle finger and forefinger, the system could confirm the gesture and position of the user's middle finger and forefinger, so as to position more accurately the gesture and position of the user's hands. It's possible to confirm accurately the position of the icons according to the preset parameters of the user's hands, if the system identifies a palm already touched the screen.

Furthermore, a control zone 801 can be shown suitable for the thumb to operate the control zone 801, and switch the contents of 800 or 38, 39, 40 and 41. 801 can be set for operation by clicking or by sliding.

In FIG. 36, when the user covers a region by multiple fingers and the thumb, the system could display icon 809 at the touching position available for the palm, giving a hint to the user to touch the screen by the palm to confirm selection of objects 51, 52 and 53 or lock up selection.

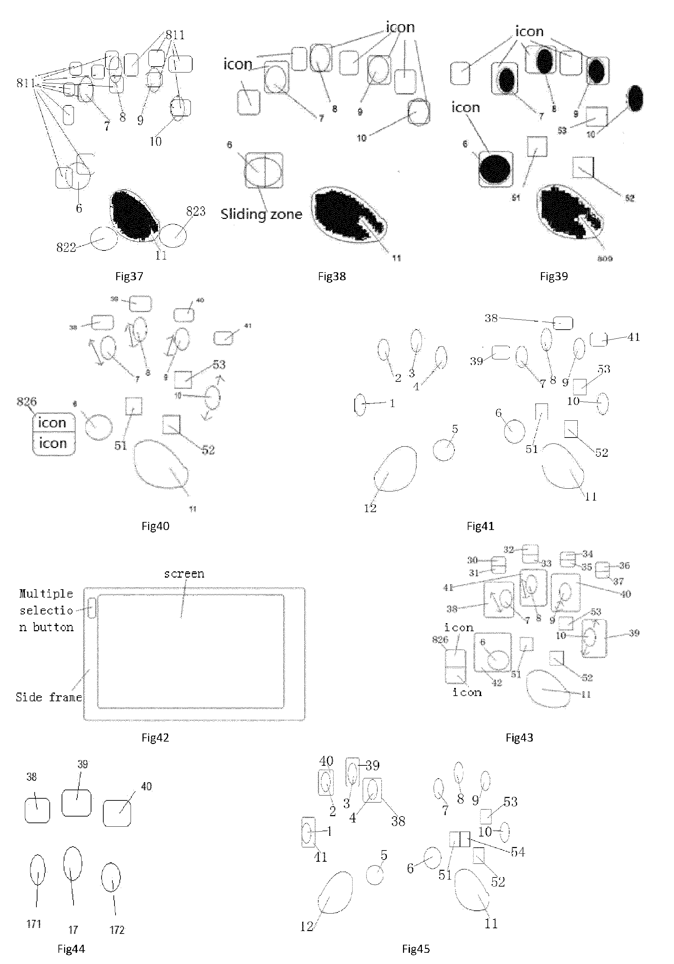

Referring to FIG. 37, the user could touch an object or region or position by the palm, then the system will display various icons at the position suitable for operation by other fingers of the hand specific to the palm, or shift the icons of corresponding options at easy-to-operate positions under or nearby other fingers of the hand. 6, 7, 8, 9 and 10 represent positions when other fingers of the user are relaxed and bent naturally, and 811 represents the icons of multiple options. In the case of many icons of options, the options slidden by the fingers could be zoomed in to avoid misoperation. This could be shown in the way shown in FIG. 38, wherein the thumb could select by the slider which icons are shown, just like the primary menu shown at the thumb, and secondary one shown at the fingers. In this way, only a few icons are shown at one time for easier operation by the user, or the icons could be arranged better by the profile of the hands, or zoomed in for easier touch.

Since the icons are controlled to occur at easy-to-operate positions under or nearby the user's fingers, the user could operate the icons while the hand for calling the operation interface doesn't exit the screen. Hence, the system can be set to disappear or fade out quickly once the entire hand exits it or is far away from the options on the screen.

2, Biointerface allows to adjust its own shape or position for easier operation according to the body components of the user touching the screen. For example, while finding out that multiple fingers and palm of the same hand touch the screen, Biointerface could adjust the position of its icons or slider, so as to approach the position available for the user's fingers and palm, or appear directly nearby or under the fingers or palm once occurrence of the icons; the shape, curvature, spacing and size of icons and slider, etc, are subject to the position of the user's fingers. Referring to FIG. 39, in the event of occurrence of relevant system events, e.g.: when multiple fingers and the thumb of the user touch the screen, or multiple fingers and the palm touch the screen, graphical objects such as icons or slider, etc, will occur at easy-to-operate positions under or nearby the user's fingers, thumb or even palm. The icons may appear before the fingers touch the screen, and allow to adjust their positions nearby or under the fingers once the fingers touch the screen, or appear directly nearby or under the fingers after the fingers touch the screen.

The icons may just appear at easy-to-operate positions under or nearby the fingers, without limitation to those within the number of fingers in touch with the screen.

3, The icons of Biointerface may correspond to various parts of the hand, or the easy-to-touch regions or positions nearby or under these parts, so that you can use and select relevant icons and use their corresponding functions while the hands are not required to move in a big range to touch the icons. In the event of occurrence of icons, the corresponding fingers are either touching the screen or haven't yet touched the screen. The icons may also correspond to a certain touch point, irrespective of which finger. In FIG. 44, 171, 17, 172 are touch images of three fingers, which correspond to 38, 39, 40, respectively. The icons may correspond to the following objects; one or more icons may correspond to the same object:
A. Specific body components of the user, e.g.: specific fingers and palm for touch commands of sliding by the right hand's middle finger, multiple press and rapping the screen ;
B. A certain easy-to-operate region or position under or nearby the user's hand, e.g.: pressing corresponding touch region or position, or sliding the touch points on corresponding region or position, or issuing various touch commands ;
C. A certain easy-to-operate object (e.g.: an icon or sliding zone) under or nearby the user's hand, namely, conducting various operations of relevant objects, and issuing various touch commands on corresponding objects ;
D. Touch points within the easy-to-operate region under or nearby the user's hand, e.g.: conducting various operations of sliding, clicking and multiple pressing with the touch points.

The corresponding operations of these objects allow to select different icons, use the functions of the corresponding icons and switch icons. For example, the icons shown in FIG. 13 correspond to the right hand's forefinger; if the forefinger moves rightwards, select 31; if moving upwards, select 30; after selection of corresponding icons, you may confirm to perform the corresponding functions of icons by multiple press.

Referring to FIG. 15, the graphical marks appear under or nearby the fingers or palm, guiding the correlated body components to conduct relevant operations. When multiple fingers of the user touch the screen, the icons emerge under various fingers. The pattern of every icon is shown in FIG. 13, wherein 17 represents the touch points of the user's fingers, and various functions are marked by 30, 31, 32, 33, 34, 35, 36, 37, 56, 57, 58 and 59, of which the selected functions will be highlighted. The icons may move along with the corresponding touch points or fingers, but the relevant position is maintained unchanged or unchanged. If the icons are set to correspond to a certain finger, and when the finger exits the screen and then touches again the screen, the icons will adjust their own position, so as to maintain its relative position with the finger.

The user could use the corresponding functions by sliding fingers towards relevant directions or clicking relevant positions, or select corresponding icons by sliding fingers towards relevant directions, meanwhile enabling the fingers to exit the screen, or rap the screen after sliding fingers to select corresponding icons, or use the corresponding functions of icons by multiple press. Also, the user could slide fingers towards marked direction to perform relevant operations.

In FIG. 40, after 6, 7, 8, 9, 10, 11 selects the objects within a certain regions or regions by covering gesture, 38, 39, 40 and 41 appear correspondingly to fingers 7, 8, 9 and 10 826 represents sliders, onto which there are two icons correspondingly to the thumb; the thumb allows to select icons by sliding, and 38, 39, 40 and 41 are switched to different icons. For example, the marking functions of icon 41 could be used only if the little finger 10 presses or raps the screen in situ, or the finger slides along the arrow direction. If other fingers use the corresponding icons by sliding, you may slide the fingers by the nearby arrow directions shown in the figure, namely, bending the fingers, and sliding the fingertip towards the center of palm, since the sliding of fingers at this direction is most obvious, thus minimizing misoperation. A finger also corresponds to multiple icons, so different icons are selected and used by sliding fingers or other touch commands.

The icons may correspond to the regions under or nearby the fingers, rather than to various fingers.

In FIG. 43, icons 30 and 31 correspond to 38, icons 32 and 33 correspond to 41, icons 34 and 35 correspond to 40, icons 36 and 37 correspond to 39, 826 corresponds to 42. Touch points slide in 38, 39, 40 and 41 or issue various touch commands so as to select different icons and use the corresponding functions of icons, for example, sliding fingers in 38 along the arrow direction towards the center of palm is to select 31, sliding outwards along the center of palm is to remove selection of 31, and continuous sliding is to select 30; after selection of icons, the corresponding functions of icons are used through relevant touch commands. 38, 39, 40, 41 and 42 could be shown or not shown on the screen. If they're shown, they could be considered as an icon, permitting to mark the position corresponding to 30 and 31; so the user could use or select icons 30 and 31, etc, by touching corresponding positions.

If the options or sliders in Biointerface correspond to relevant part of the hand, or to the easy-to-operate positions under or nearby the relevant parts, Biointerface may not appear at the easy-to-operate positions of relevant parts, but appear at other positions particularly within the viewing range of the user, e.g.: the objects under operation or positions easy for watching. Referring to FIG. 38, when the user's fingers and thumb touch the screen, there are multiple options for menus 802 correspondingly to various fingers. The user is only required to conduct relevant operations by fingers, e.g.: sliding, so as to select the corresponding options without need of touching these options. This case is the same in FIG. 31.

As shown in FIG. 37, icons 822 and 823 occur at the edge of the palm, giving a hint to apply pressure towards relevant directions, switch the icons nearby the fingers, e.g.: 822 is a "multiple cut plate", 823 is a "favorite"; after the left side of palm applies pressure to the screen, the contents in the cut plate will be shown at the easy-to-operate positions under or nearby the fingers. 822 and 823 can be taken as a primary menu, and the icons nearby the finger as secondary menu. For example, in the window of explorer, 822 is a "favorite", once upon selection, the icons nearby the fingers will become various websites for collections; 823 represents "page and setting", once upon selection, the icons nearby the fingers will become icons such as "save the page", "print" and "web setting", of which common icons including: "save the page", shall appear at positions most available for operation by the finger, meanwhile big icons shall be always maintained.

Icons or sliders in Biointerface mustn't correspond to the fingers; it's possible that multiple icons correspond to a touch point or body component, or multiple touch points or the palm or fingers correspond to an icon, e.g.: fingers or palm could select the corresponding functions of icons by sliding or applying different pressures.

Icons may also appear between two fingers, allowing to use the corresponding functions by enabling two fingers to approach to each other.

4, The patterns of menus could be confirmed according to the touch conditions of the user. For example, if the user's thumb touches the screen along with other fingers, and there is an idle state, control zone 801 may be shown under the thumb, so as to control the options nearby the fingers, e.g.: superior menu is shown on 801 and submenu nearby the fingers. If the thumb doesn't touch the screen, the primary menu is shown only nearby the fingers, and then the secondary menu is shown after selection of corresponding options.

When the user intends to use the corresponding functions of a certain icon, the icons on Biointerface will change and display new contents, as the case that the secondary menu is shown after selection of primary menu.

The icons may not appear after touching the screen, for example, the user could keep its palm in touch with the screen; if touching a certain menu with one or more fingers of the hand for the palm while sliding the thumb, the icons of the menu will be rearranged to appear at easy-to-operate positions under or nearby the fingers of the hand for the palm, or relocated automatically according to the position of fingers touching the screen, or correspond to the icons and sliders under the hand's various parts, fingers and palm, or within the easy-to-operate regions nearby the fingers or under or nearby the fingers as well as the touch points within the operating region.

The above-specified free icons could be referenced for the visual effects and interaction modes, etc, on Biointerface.

The options are provided by using Biointerface, and the options appear at the easy-to-operate positions under or nearby the fingers, or even under the palm or correspondingly to the fingers and palm; the user could, when the whole hand doesn't completely exit the screen, select options by pressing and sliding. Therefore, the system could, if necessary, set the hand corresponding to Biointerface, or confirm that the touch points for the emergence of Biointerface exit the screen, or the hands for the touch objects (e.g.: fingers or palm) corresponding to the touch points exit the screen, the options will immediately disappear or fade out quickly. If the touch screen with 3D sensing capability is used, the options disappear once the corresponding touch objects are set to be far away from the screen, thereby providing smooth operating experience. The user could set which fingers are used on priority by the system for the operating interface, so that the icons, etc, appear nearby the most flexible finger.

Biointerface allows calling by the following methods, including but not limited to:
1, Via touch commands mentioned in the present invention, especially those for calling menus and free icons ;
2, Via touch commands for selecting objects within a region or regions, e.g.: covering gesture;
3, By touching relevant regions or objects with one or more fingers; furthermore, Biointerface could be called if one or more of the thumb or palm of the hand touch the screen, or the touch of thumb or palm could cause calling of different Biointerface. Moreover, sliding the thumb and fingers on the screen could confirm calling of different patterns of menus ;
4, By specific touch images, e.g.: touch image when the entire hand covers the screen or shown in FIG. 23 ;
5, By touching a certain object ;
6, By keeping multiple fingers in touch with the screen, and unfolding several combined fingers.

Some common touch commands for calling Biointerface:
1, Several fingers touch the corresponding objects or regions, (if a small object is touched, one or more fingers must touch the object).
2, Multiple fingers slide on the screen, and keep their relative position unchanged.
3, Keep multiple fingers in touch with the screen, and unfold some combined fingers.

The called options are set not to disappear immediately, but disappear slowly for clicking by the user.

Biointerface can also be considered as a special pattern of menus; the characteristics of aforementioned menus are also suitable for Biointerface, e.g.: pin up Biointerface by sliding the thumb. Free icons can be referenced for the patterns of Biointerface icons, various interaction effects and visual effects, etc.

FIG. 32 depicts the changes of the same Biointerface under different conditions after 3 finger touch the screen, of which 2, 3, 4, 7, 8, 9 are touch images of the fingers, 819, 820 and 821 are icons. When 3 fingers touch the screen, the icons of different functions appear under every finger, and the relevant functions of the icons are used by multiple pressing or sliding the fingers or lifting the fingers simultaneously; 819, 820 and 821 will disappear quickly after 3 fingers exit them or exit far away from the screen. Furthermore, the system could also, according to the tough images of 3 fingers (position relationship), judge these 3 fingers so as to show the icons of different functions.

The touch points of Biointerface mustn't be triggered by the hands for Biointerface, referring to FIG. if 16, 6, 7, 8, 9, 10 and 11 of the right hand select objects 51, 52 and 53 by covering method, icons appear under the fingers of the left hand.

### 6. Multi-object collaborative operation:

The present invention provides a structure to confirm the relationship among the touch points and selected regions or positions or objects, and more particularly the grouping principles for the touch points and the regions or positions or objects selected or confirmed by the touch points. The user and the programmer may, according to this structure, define the relationship among the touch points and selected or confirmed regions or positions or objects, so as to fully utilize the operation information, enabling the user to express his/her operation intention with fewer steps, improve the operation experience and increase operation efficiency.

The grouping information of touch points and selected regions or positions or objects, which may be used to confirm the relationship among the touch points and selected regions or positions or objects, include but not limited to:
1. Touch object or touch image to select the regions or positions or objects, particularly different parts of the hand or touch tools, e.g. touch and select the objects with one or two fingers or a touch pen;
2. Different operations to select objects or regions or positions, e.g. objects selected by clicking, objects selected by double clicking, objects selected by dragging the dragging boxes, objects selected by the profiles formed by touch images and objects selected by touch image covering, which will be divided into different groups;
3. The following mode may be called "multi-touch collaborative operation": In the multi-touch environment, use one or multiple touch points to select or confirm one or multiple objects or regions or positions and then keep them not to completely exit the confirmed or selected objects; according to the regions or positions or objects selected or confirmed by the touch points, confirm the functions of subsequent other touch points as well as the effect and position of the operation to execute or to be executed by the objects selected by other touch points. Referring to FIG. 41 for an example, the user uses the right hand fingers 6, 7, 8, 9, 10 and the palm 11 to select the objects 51, 52, 53 by covering gesture, and then lifts the fingers to touch 38, 39, 41 to use the corresponding functions when icons 38, 39, 41 occur nearby 7, 8, 9. Unless the fingers 6, 7, 8, 9, 10 and the palm 11 exit the screen completely, otherwise the selection of 51, 52, 53 will be kept. Meanwhile, other fingers (for example, 3) may be used to touch other objects or positions, or 1, 2, 3, 4, 5, 12 may be used to select other objects or regions by covering gesture, so as to execute different operations according to 51, 52, 53 and other selected objects or regions.

Furthermore, the system may group the touch points and objects selected by touch points according to the hand where the touch points are located.

After the grouping of the objects involved in the operation is confirmed, the relationship among groups of objects and the operations executed may be confirmed by program setting. The system may confirm their relationship and possible operation in combination with the attributes and quantity of each group of objects, the selection sequence and their group, for example, whether the objects belong to a group selected by clicking with two fingers or a group always touched in multi-touch collaborative operation, and then the operation will be executed directly or corresponding options will be given. For example, the group with fewer objects is always a group of objects operating other objects or the destination for files. When a group of objects are all program icons or shared website icons, the group of objects will always be used to operate another group of objects.

In case of absence of coordination with the multi-touch collaborative operation, when the selected positions or objects or regions are grouped according to the difference between the touch images of touch objects and the touch objects or different selection modes, and different groups of objects interact, the corresponding keys or icons, etc. may be pressed to enable the system to enter into the multiple-selection mode and inform the system of the correlation among selected objects, so as to avoid misoperation. A mobile device, e.g. a tablet PC, may be provided with special keys to execute multiple selections. As shown in FIG. 42, the key is located at the upper left corner for easier operation.

One object may belong to several groups. One extreme example is A, B, C, D, E, F objects or groups of objects, of which A is selected with hand A by covering gesture, B is pressed by a finger of hand A, C is pressed by the palm of hand B, D is pressed by a finger of hand B, E is similarly pressed by a finger of hand B, but E is selected by double clicking E with a finger after C and D are selected, F is selected with hand B, after F is selected with hand B by covering gestures, upon twisting of the palm in place with the palm centre as the centre of a circle, selection of F is locked, and then the hand exits F for selection of C, D, E. If divided by hands for selection, A, B belong to a group and C, D, E, F belong to a group, while each of A, B, C, D, E, F or a group of objects may belong to a group according to their selection modes as well as selected sequences and positions.

The user can further define the operation intention and prevent misoperation via the operation for ending.

For example, during the operation of copying, pasting or moving files, when it is required to end the operation, the touch point shall touch the file destination without interruption, so as to execute the operation and prevent the user from touching wrong position and making it impossible to cancel the misoperation.

Example 1: when moving a file, as shown in FIG. 18, the user could copy the file by multi-touch collaborative operation, select the content (several images and words, etc.) by covering with 4 fingers 15 and thumb 5 of the left hand, and confirm the position to be pasted with right hand by covering. While the right hand doesn't move, the fingers may slide on the screen to adjust the pattern of copied contents and layout type of words and images. During adjustment, the preview effect of the position selected with right hand will be real-time displayed. When the left hand exits the screen, the right hand shall keep in touch with the position to be pasted, so as to copy the content to the position touched by the right hand.

Example 2: Press multiple selection buttons to inform the system that several objects under operation are correlated. The user firstly uses a finger to touch the object to select in sequence one or multiple objects to be copied, and then uses two fingers to touch the position to be pasted, for example, a certain position of a document or file folder. Only when the position to be pasted is touched without interruption before release of multiple-selection mode, the system could execute the operations of copy and paste, so as to confirm the user's intention and prevent pasting at wrong position selected by the user.

These selection modes can be coordinated with each other and used simultaneously. During grouping of selected objects or regions of the touch images or multi-touch collaborative operation, the system may enter into multiple-selection mode without using special key, etc., since the multi-touch collaborative operation itself has informed the correlation of several objects under operation.

Example 1: The user uses a touch point to touch the icon or interface of compression software, keep the touch point not exit the screen, meanwhile uses another finger to click the file or file folder to be compressed, uses two fingers to click the file folder with compressed files to be saved; then the touch point touching the compression software's icon exits the screen, and informs the completion of system operation. The system will open the interface of the compression software or directly give several icons of common options or directly execute the operation.

The programmer can assign different relations to each group of objects or positions, particularly mutual operation and mutual data exchange, etc.

On one hand, grouping is to divide the objects or regions into different groups; on the other hand, the confirmed description mode for each group has been given so that the programs can correctly and uniquely quote special groups and set the relationship among each group of objects and the operation to be executed. For example, the programs can set the object selected by clicking with two fingers to be copied to the object or region selected with one finger.

The relationship among each group of touch points and selected objects or regions or positions includes but not limited to:
1. A group of touch points or selected objects or regions or positions control the functions and executed operations of another group of touch points or selected regions or objects or positions;
2. A group of selected objects or regions read the information of another object or region;
3. The contents of a group of regions or objects are moved or copied to another group of regions or objects;
4. Certain region or position is taken as the operating position or the position into which the operating result is inserted or saved;
5. Confirm the correlation between a group of objects and another group of objects.

In multi-touch point collaborative operation, the user could select one or more objects or regions or positions by touching, and maintaining selection of these objects by keeping the touch points not exit the screen, so these objects and positions are called object A. In such case, it's required to select other positions or regions or objects by other touch points, and perform the corresponding operations of object A. Given that object A is already selected, the same operation of other touch points will generate different effects depending on the difference of selected object A. The operations performed by other touch points include but not limited to:
1, Calling relevant menus ;
2, Select relevant objects (e.g.: object A) for picking the existing ones or operation of menus ;
3, Operate the select object A; select and operate another one or more objects, which are called object B ;
4, Select other positions or regions.

By means of different modes, especially different touch points corresponding to different touch objects, multiple positions, regions and objects are selected simultaneously, so that the user could express to the system the logic relation among multiple selected objects, and the system could perform relevant operations according to the types and relation of objects. Such operations could provide the system with the logic relation of the information, including but not limited to one or more of the followings:
Which objects and regions are involved?
Which objects and regions are divided into one group?
Which touch objects are used by the user, and which methods are used to select various objects and regions?
What operations have been performed on various objects and regions?

As well as selection sequence of various objects and regions. Every element could correspond to different operating information. The system could, according to the types of objects, number of objects, sequence of selection, etc, confirm the relation among objects, and perform corresponding operations or give options. The relation among various groups of touch points as well as selected objects or regions or positions includes but not limited to:
One group of touch points or selected objects or regions or positions allow to control the functions and performed operations of another group of touch points or selected regions or objects or positions, and one group of selected objects or regions allow to read the information of another group of objects or regions, shift or copy the contents of one group of regions or objects to another group of regions or objects, as well as which group of regions or positions are taken as the operating positions. After selection of one group of objects, the relevant objects on the interface are turned into icons and put into a menu still within the scope of the present invention.

Example 1: the user could select the icon of a compression software using a group of touch points, keep the touch points not exit the screen, and then select multiple files using another group of touch points, so the selected files will be compressed. Furthermore, the user could permit the touch points for selection of compression software to exit the screen after selection of the files to be compressed. In such case, the system believes the user has selected the files to be compressed, and then gives corresponding options, e.g.: "cancel" or allows the users to select the position of saving the generated compression files, or open the interface of compression software. In such case, the user could also click other icons on the desktop, e.g.: icons of an e-mail program, and the system will open the program of e-mail, and attach the generated attachments. In certain conditions, it occurs to the user that other programs of e-mail should be opened, rather than finish operations immediately, after the user has selected the files to be compressed and the system has given relevant options. In such case, the system will improperly correlate the operations of clicking e-mail program with current operations. Therefore, the system can be set to believe that the user will take the compressed files as attachments only when the user one or more touch points to keep in touch with the option menus given by the system or the compression program's operating interface, meanwhile other touch points are used to click the icons of e-mail program, namely, add object A to object B, expressing clearly the correlation of two objects. Also, the correlation could be expressed through multiple selection, by pressing multiple selection button to click firstly the interface of compression software and then the icon of e-mail program; and, the touch with the icon of e-mail will be always kept prior to releasing multiple selection button, so the system will definitely confirm that the user will take the compressed files as attachments. Also, the user could express its intention to attach the compressed files into the e-mail by dragging the icon of e-mail program to the interface of compression software; however, as the relation of two objects for such operation is not very clear, the system could only analyze the possible operations of e-mail program and compressed files, making a conclusion that the user may hope to send out the compressed files as attachments, or add the e-mail program into the compressed files, so the system will give corresponding options for the users, and confirm the operations to be performed.

The selection sequence is also an important information for judging the user's intention by the system, for example, under a multiple selection mode, the user clicks firstly the interface of compression software and then the file folder, and always keeps in touch with the file folder prior to releasing multiple picking key, so the system will believe that the user will save the compressed files into the file folder. If the user clicks firstly the file folder and then the interface of compression software in multiple picking mode, and also always keeps in touch with the interface of compression software prior to releasing multiple picking key, the system will believe that the user intends to add this file folder into the compressed files.

Example 2: if selecting the icon of a "highlighted picking region" with a touch point by means of pressing, and sliding another group of touch points on the screen to select the region for intended operation, this region will be highlighted. Or, if covering a certain region on the screen with the fingers and palm of a finger, the covered region will be selected and then highlighted.

The user could also keep A not exit by pressing the icon of a file folder with a finger A, and select other files or file folders with another or more touch points, of which the selected files will be copied to the file folders. The files to be copied can be selected by touching the icons of files, or multiple files or file folders to be copied in a region can also be selected by covering gesture.

In an electronic map, the program in a bubble prompt box shows in real-time the detailed position touched by the user or the zoomed-in images; the prompt box disappears once the touch points exit the screen. The user could operate the contents in the prompt box with other touch points while keeping in touch with the same position on the map.

Example 3: a image is pressed by the touch point A, and corresponding menus are called by other touch points, then the icon of "print" option in the menu is pressed by the touch point B, while the touch point B is kept not exit the screen. In such case, the touch point A may exit the screen to select other images to be printed; after selection, the touch point B exits the screen, then corresponding options appear, allowing to select the relevant print layout.

A file is pressed by the touch point A, and corresponding menus are called by other touch points, then "compress" option in the menu is pressed by the touch point B, while the touch point B doesn't exit the screen. In such case, the touch point A may exit the screen to select other files to be compressed; after selection, the touch point B exits the screen, then the corresponding control interface appears. In such case, the user could conduct further operation in the control interface, or click other file folders on the desktop with two fingers, and select the file folder into which the compressed files are saved. If a finger is used to click other file folders on the desktop, the system doesn't think this operation is correlated with current operations, so normally selecting or opening the file folder.

The touch points for selection of various groups of objects can also be used for further operation of this group or other groups of objects.

Example 4: many images are displayed on the desktop, of which the program icon "Prepare slides" is covered by a hand A, and another image is taken as the background of Prepare slides. By sliding the thumb, the objects pressed under the touch points by the default selection are switched as the objects to be covered, then the user could use the other hand B to select the words and images used for preparing slides. At this time, three fingers could be used to select the images by sliding along these images to be selected. Or, one finger could be used to double-click the images or the words to be selected. When selecting words, a paragraph of words are firstly highlighted and then double-clicked. The selected images and words will be added to a specific region, and one paragraph of words will be shown as a image. If it's intended to cancel the selection of the images or words, the relevant images or words are just dragged out of the specific region. During selection of images or words, the options for simple processing of the touched images or words, e.g.: "take the images as titles" and "highlight font" will appear around the fingers of hand A. Or, the relevant information about images will be shown.

The user could also double-click an audio document or a slide template by two fingers, indicating that these will be used as background sound or template. The corresponding graphical effect is shown in a way that the document is added below the region under hand A.

The user could lift hand A after hand B has selected the intended images. This action will be regarded as confirmation of operation. There will be more options after lifting the hand. If the user lifts hand A without any operation by hand B, the options will not appear, indicating the user isn't intended for further operation.

The user selects one image by a group of touch points and confirms the copy position of the selected images by another group of touch points. The images are twisted if multiple touch points for confirming the position of the images are taken as top points. As shown in FIG. 18, 15, 5 and 12 are used for selecting the source images, 16 and 6 used for confirming the copy position of the images; the shape and size of the images can be adjusted by setting 16 and 6 as the top points.

Another situation is to select a paragraph of words or multiple images by 15, 5 and12 touch points. While keeping in touch,16 and 6 are used to confirm the copy position of the images; meanwhile, by changing the relative position of 16 and 6 and applying different pressures, it's possible to switch the layout of the images or words and also add various effects (e.g.: providing 3D effects for the words and images while inclining to a certain direction). When 16 and 6 keep in touch with the screen, 15, 5 and 12 also enable to operate the images and words instead of stopping the operation. Biointerface can be set to appear nearby 15, 5 and 12, which can use the functions though pressure and sliding back and forth. Also, 15, 5 and 12 can be set to exit the screen when 16 and 6 are in touch with the screen. The operation on images and words can be done by clicking the icons. It's worthy to note that, when 16 and 6 exit from the screen, 15, 5 and 12 also exit, so copy will be operated.

The selected objects could only have impact on or be subject to specific touch points, for instance, touch of specific positions, different body components of the user, different touch commands and touch objects like the operation tools, which correspond to different operations.

Example 5: using one hand to cover a certain image on the page, and two fingers to scroll the page, the image will be fixed without moving with the page. The fingers' sliding is not correlated to the image. The image will be copied to a corresponding position when using a finger or a touch tool to click another position or a file folder on the page. If putting four fingers of the other hand and the palm on the screen, the options for processing the pressed image will occur under each finger.

Sometimes the selected or confirmed objects are only correlated to the touch points from different hands of the users. For example, during operation, the system judges if the touch points are from one hand according to the relationship of distance and position between two touch points as well as the relation with the positions of the touch image of palm on the screen.

Another example is to select a group of objects, and put the fingers into the region when it emerges around the objects. After the screen checks the approaching palm, options corresponding to each finger will appear nearby these four fingers while operation in other positions will not have impact on the selected objects.

Example 6: the left hand is used to select a logistics truck by a covering gesture, and multiple options occur under the fingers of the left hand in touch with the screen, using one or more fingers to select the corresponding options. For example, using fingers to rap the screen to pick "reload ammunition" and "maintain"; when the picked functional icon turns into a slider, the user can move his fingers front and back to select the degree of reloading ammunition and maintenance, for example, how much the user needs to reload ammunition for the target, 70% or 80%? And then the targets required for reloading ammunition and maintenance are selected. You can select a piece of targets by covering gesture to perform the preset operation. There are three kinds of releasing methods:
1. One way is that the user always touches the logistics truck, at this time all other objects touched by the user's other fingers will be subject to operations. When the user doesn't touch the logistics truck, all the touched objects will not be supplied.
2. Another one is to set as only supplying the first subsequent touched object
3. Or, after completion of setting on the logistics truck, setting can be made for "save" or "automatic save by the system". When picking other objects, this option can be found in the menu, and then it is supplied by logistics truck.

This process can be made reversely, that is to say, firstly keep in touch with the selected object after picking the object and then select the logistics truck. The previously selected object can be set to approach positively the subsequent one.

In the game, a touch point is to call the next layer of option by picking the building of "power center" on the game map. The next layer of option is adopted in the form of free icons or Biointerface. Taking free icons, for example, selecting the icon of "energy cover", the icon turns into a slider to control the energy intensity. While keeping in touch with the control icon, you can select the region you want to release the energy cover by covering gesture. When touch points for selecting regions keep in touch with the touch screen, an icon occurs on the edge of each touch point, so as to further select the type of energy cover. You can click the appropriate icon to select the type of energy cover and confirm to start the energy cover at present selected location. After starting the energy cover, its profile can be still controlled by 6, 16 and 11 shown in FIG.18, and 6, 16, 11 could control the strength of different regions of energy cover's by different pressure.

It should be noted that the touch point for selecting object A and that for performing further operation are not necessary to be completely different, as long as the touch point for selecting object doesn't completely exit the screen. For example, the user covers an object A by hand, then the corresponding option is called out. The options occur under or nearby the fingers for selecting object A that can operate the corresponding options.

In the same operating system, the relationship of each group of objects shall conform to certain criterions. For example, if grouping by selection sequence, previously selected objects will be copied to the subsequent ones. Or the object selected by one finger will be moved to the object selected by two fingers. In multi-touch points collaborative operation, the contents of the subsequent selected object will be read by the first group of object selected by touch points. When the operation is over, the object still selected will be regarded as the destination for performance of whole operations. For example, the final files will be saved to the object kept in touch until the end of the operation, regardless of the selection sequence. The position clicked by the touch tools (like touch pen) will be always regarded as a position for paste, regardless of the sequence. That is to say, among groups of rules, the degree of priority is divided into high and low. However, this relationship will only apply to simple operations, especially when copying, pasting and moving files. In the complex operations, the most possible option should be given for the user for selection at the end of the operation, because the user will be confused by extremely complex rules.

The operating methods mentioned above are also applicable to the touch screen's operating tools, especially the multi-touch screen operating tools.

On the conditions of precisely selecting the operating positions, it's advisable to firstly confirm the operating positions, and then select the source objects like images. The operating region is confirmed by touch images and then different parts' parameters are controlled by the touch points for controlling.

Referring to FIG. 18, the projection of 3D object 61 on the plane or curved surface of the touch screen is controlled by the finger 16, thumb 6 and palm 11, either of the color/thickness of 61 is controlled by the pressure of 16, 11 and 6, and other parameters of 61 are controlled by pressing and sliding on the screen with 15, 6 and 11, for example, coordinate value, thickness on z axle's coordinate, and the angle with the coordinate axle or a certain reference object. In this way, two hands are used to control the spatial position and shape of 61, or further control the corresponding functions of 61, e.g.: if 61 is a brush, 15 could control the concentration of brushing color, 16 could control the concentration of brushing color on different locations, e.g.: as shown in 16, the concentration of brushing color in relevant position is enhanced with the growing pressure of a certain finger on the screen.

The user presses an image by his hands, then a same image will emerge in another position. And the touch image including the user's touch pressure information in different locations will emerge in real time. Different pressures are shown by different effects for the user's preview.

The pressure is provided with relevant functions, e.g.: filtering effect and physical properties, etc. The regions under bigger pressure will be dealt with more effectively. When the user is satisfied with the preview effect, the touch image of the hand pressing on the image is kept unchanged, and other touch points of the other hand are used for confirmation on corresponding graphical options (e.g.: Biointerface). Then the changes made to the images will be applied to these images, or the user can select different effects (like different filtering) with the other hand. Also, the pressed region can be divided into many zones according to different pressures. For example, when building a 3D object, the pressed region can be divided into many zones according to different touch pressures and given colors gradually changed. In another position, a strip-like menu with gradually changed colors will be shown, permitting simultaneous operation with many fingers. As shown in FIG. 14, during operation, the menu will be twisted along with the sliding of the fingers like a soft ribbon. Each location on the menu corresponds to the pressed zone with the same color. The touch points permit to control the parameters of different zones or exert different effects to different zones by sliding on the menu. For instance, painting on a certain zone is possible with a touch pen so as to increase the physical hardness of virtual 3D objects corresponding to this zone or increase the height of the relevant regions.

When picking one or more objects, the system can divide a region into many subregions or many objects into groups according to relevant rules under presettings. Each sub-region or group will be marked by colors or characters. Meanwhile around the touch points for controlling, relevant marks and colors will emerge, giving a hint to the user of the control zones or objects corresponding to the touch points. In FIG. 45, 51 and 52 are two objects, 53 and 54 are two divided zones, which correspond to 38-41, respectively. Or a menu will emerge including multi zones corresponding to the regions and objects. Also as shown in FIG.14, there are many options such as 231- 233, which are controlled through touch points 171-173. This method of providing options is applicable to all situations of picking one subject or one region and then providing multiple options for simultaneous operation by touch points.

### 7, Pre-judge menus:

The system is able to give some appropriate interactive options, when the selected multiple objects contain interactive ones, especially when the selected objects also contain files to be opened by the program icons and programs, icons to be shared to a particular website and files to be shared.

For example, if the user presses multi-selection keys to simultaneously select a compression software's icons and multiple files by clicking the objects in turn or by dragging selection box, the selected files' options to be compressed by the selected compression software shall be provided in the subsequent menus.

The user could also select a compression software's icon and other files by covering, and then an icon called "compress files via compression software" will occur in a form of Biointerface. The user can perform the operation by sliding the fingers corresponding to the icon or by clicking the icon.

This menu can also be used in collaboration with multi-touch points. The user could simultaneously select the icon of "share to the blog" and the icon of " prepare slide" by means of covering with hand A; since these two icons are selected simultaneously by hand A, the system will firstly judge that the user's intended to prepare the selected objects as slides, and then share them to original blog, while giving corresponding options. The options can be provided in the form of Biointerface, allowing to appear nearby the fingers corresponding to one of them, or in other locations. After selecting the appropriate options, the user can use hand B to select the images that will be made as a slide and shared to the blog. Double-clicking the corresponding images by hand B represents selection of corresponding images, which will be placed at a specific location. And, abbreviated drawing of various pages of the slides is shown at appropriate position. Dragging images off the corresponding position means to remove the selection of the images. When selecting images, the options corresponding to each finger will occur under the fingers of the hand A, by which the images touched by the finger of hand B can be subject to simple processing. If the multiple fingers of hand B touch the images, relevant information of files will be shown under the several fingers. The operation is considered as ended once hand A exits the screen, and then the appropriate options or the interface for opening program will occur, allowing the user to make further choice, such as: to which page of the blog it's intended for sharing, or privacy settings.

In special cases, when selecting a image or word, the blank position of electronic document will be selected at the same time, permitting to copy, paste or cut. For example, the system is informed when multiple objects clicked in order are correlated multi-selection button, etc. Then, if clicking the images and the location you want to copy, the system will give the appropriate options, allowing the user to select copy, cut, or cancel. If the user doesn't select, default operation will be performed. The system could make the judgment according to the selection order. For example, firstly selecting the location you want to paste and then the image corresponds to copy. Conversely, selecting the image firstly and then the location you want to paste corresponds to cut. Or, if it's set that an empty location must be firstly selected then the image, the system will regard the user intended to copy and paste, performing the default operation or giving the options. Otherwise, the user isn't intended to copy and paste. In order to avoid misoperation, it's set that only when the touch points always keep in touch with the position for pasting before removing multiple selections, the paste will be performed.

### 8, Drag

When dragging, for example, the files into a file folder or a program icon or a program interface, some corresponding options will emerge. For instance, several options will come out allowing the user to select copying or moving files when they are dragged to a certain file folder. And the user can prevent the touch points of the dragged objects from exiting the screen and use other touch points to select the present options under a multi-touch environment. In FIG. 30, 41 is a file, 17 is the touch point of finger, and 38-40 are possible locations of the icons. The pattern of FIG. 31 can also be adopted. If the user permits the touch points for dragging to exit the screen without selection of any option, the operation shall be performed by the preset default of the system. The options can be set to occur only when dragging by specific touch points or methods. For instance, the options will pop up when the user drags a file by two fingers or presses other keys at the same time; the options will not occur by dragging with a single finger. In the presence of an option, the user can select the option by lift one of two fingers dragging the files, or by other touch points. If the fingers for dragging files don't leave the selected objects or exit the screen, the operation will not be carried out by the default setting. If the user drags the icon using a finger, the options will still occur once the finger 172 beside 17 touches the screen, or 172 slides beside 17, when or before dragging to the file holder, without need of using two fingers at first. The options don't occur by dragging with a single finger, with its aim of avoiding trouble when the user intends to move files by default settings.

In addition, the user can create new e-mails by dragging the files to the icon of the e-mail program and add the dragged files as attachments.

### 9, Touch tools and operation interface

The stylus pen is used for writing on the screen, and the fingers can control related functions by touching other locations. For example, when the user holds a stylus pen by one hand to write on the screen, and the pen contacts with the screen, a window or a control zone will occur at a proper position on the screen. The position can be set up by the user and fixed in a zone on the screen, e.g.: left upper side of the screen. Or, the software is used to set up the zone in real-time according to the location of the user's hands and stylus pen as well as the touched images and the user's habits. For example, the control zone will be always situated nearby the finger on the left side of the operating tool in touch with the screen. The system can identify left or right sides by the gravity sensor.

The menus of one or multiple spare icons are shown simultaneously in the control zone. The menus have different patterns, allowing to use any modes provided in the present invention.

For example, as shown in the pattern of FIG. 6, 71 is a control zone, and 72 is touch screen's operating tool. Possible icons of spare functions are shown in 71. Once touching by the user, relevant functions are provided, such as review, annotate, delete, modify color and insert. Menu zone allows sliding. When the user's thumb slides on the menu, the icons on the menu slide towards relevant directions, thus hiding old icons and displaying new ones. The whole menu can be imagined like a ball or circle with its centre at the lower side of the screen. The displayed menus are a part of the whole menus. Icons and their locations can be edited by the users, or automatically arranged by the system by the operating frequency. Or, a common list can be generated. Icons in common list will be displayed under default state, and other icons can be showed by sliding. Icons in the menu can be switched by the stylus pen to relevant functions after clicking, or switched by pressing and holding, or switched to other preset states after releasing. Or, if pressing and holding, the stylus pen is used to select relevant regions, and operation is performed in the relevant regions after releasing. Icons in the menu still have press sensing capability, e.g.: the buttons for controlling the shade difference and thickness of the stylus pen could function by press sensing, e.g.:, if harder you press, deeper and thicker the color will be. To avoid misoperation when sliding the menus, you can set an independent sliding zone. For example, FIG.1 depicts the sliding operation region of the menu. Options can be provided in the control zone by calling icons or other modes. Even the touch command is directly adopted to guide the user instead of any other methods. 72 control zone can also adopt the form in FIG.721, wherein sliding along the arrow direction corresponds to "cut" and "paste" respectively.

The stylus pen can be controlled not only by touching the objects in the control zone, but also by selecting objects like letters, images and functional icons in other locations.

Control zone is not a zone embedded into a certain program but an independent program or small tool. For instance, control zone is a window or a search bar in the browser. The user can select contents by the stylus pen when reading or coping with the e-texts. While keeping the stylus pen not exit the selected contents and clicking the search key in the control zone with the finger, the selected contents will be turned into key words for searching.

The icon menus in the control zone are dynamic. Different menus are switched based on the touch track& location and the pressure of the stylus pen, as well as the corresponding functions. For example, new menus for functions possibly used in new annotation will occur after setting the stylus pen as the annotation.

The control modes exclusively for the operating tool in the control zone also can be applied to the finger. For example, when the finger picks objects like words in a piece of zone, corresponding menu options will occur also in the control zone, and so forth.

Touch tools can confirm their movement speed using methods like optical mouse by comparing images rapidly scanned by CCD. As the screen itself can emit lights, the mouse doesn't have to glow like the mouse, so as to prevent the users from being obstructed by the light reflection from the screen while reading the contents.

### 10. Insert and correlate:

The user could touch a certain location of a document or selected contents by one or more fingers while writing at other locations by using the stylus pen, then, the written contents will become the annotation of the location selected by the fingers. Similarly, the user also enables the system to enter multiple selection mode. For example, if pressing multiple picking key and clicking the corresponding selected contents or locations by fingers and then writing by the stylus pen, the written contents will become the annotation of selected contents or locations.

The user could touch multiple images and texts at the same time, and divide them into two groups, one of which becomes the annotation of the other one. Or, the system is enabled to enter multiple selection mode, while multiple images and texts are selected at the same time, and divided into two groups by the method mentioned in the present invention, of which one group becomes the annotation of the other one..

### 11, Precisely control the contents and locations copied and pasted

When the fingers touch the contents (such as texts) that require to precisely control the cursor's position, an auxiliary cursor will occur a few millimeters away from the contact position of the fingers and the screen. This cursor marks the selection of contents (such as texts) . The picked contents can be confirmed by the cursor. For example, when picking a text, the finger firstly stays on the text in half a second, and then a cursor for selecting the contents of text will occur in 5 mm on the left or right side of the contact region of the finger and the text; the cursor maintains a fixed position in relation to the finger. This finger is kept in contact with the screen, and the cursor is shifted to the starting position of the picked contents. The commands for starting to select contents could be issued by the following operations, including but not limited to:
1, Increase the finger's pressure on the screen,
2, Or use other fingers to quickly slide beside the finger for picking, as shown in FIG.33, wherein 17 represents one or more of the users' fingers combined together, and 172 represents other fingers quickly sliding along the arrow direction;
3, Or rapidly change the finger's pressure on the touch screen;
4, Or click the corresponding functional icon;
5, Or use all kinds of activation methods mentioned above.

After confirming to start the picking, appropriate hints will be given by the system. For example, the cursor for picking will change its color. To end the picking, the user could enable the finger for picking to exit the screen or to reduce the pressure on the screen, and the system will also give the appropriate hints. If it's intended to pick discontinuous multiple paragraphs, the command for ending the picking should be given by other ways, such as: using other fingers to quickly slide beside the finger for picking as in FIG.1, or rapidly changing the finger's pressure on the touch screen, or clicking the corresponding functional icon, or adopting all kinds of activation methods mentioned above.

In order to be compatible with the structure of existing operating system, the cursor can be implemented by a virtual mouse on the drive program layer. When the cursor is needed, you may start this mouse.

This operation mode is also applicable to multi-touch tools, such as a touch pen. Due to touch pen's tip is not blocked, there is no need to show the cursor at other locations.

When the user selects objects such as a paragraph of text or images, the selected objects will be added to the multiple cut plate through the corresponding operation, such as specific touch command or selecting appropriate options based on the graphical interface. The recommended way is to drag the selected objects to a specific region and add to the cut plate, or to click the icon beside the selected contents and add to the cut plate. Two icons may also occur correspondingly to "copy" and "paste", respectively.

As it's required to accurately confirm the position for pasting, the user should firstly move the touch points for positioning (such as touch tools, the auxiliary cursor mentioned above or fingers), to the desired location, and then maintain the cursor's position unchanged, using other touch points to switch the control zone to the selection list of multiple cut plates, or the control zone is automatically switched by the system to the selection list of multiple cut plates. When other touch points slide across different pasted contents in the control zone or stay at the pasted contents, the preview effect after pasting will appear in the position of touch points for positioning (such as touch tools, auxiliary cursors or fingers). By moving those touch points for positioning on the preview contents, the parts to be pasted could be selected rather than all contents.

### 12. A method for controlling the images (especially 3D images) generated by touch images:

The shape of the object can be confirmed by touch image, while the gesture and location of the object can be controlled by fingers.

For example, the user can put a hand on the touch screen to confirm whether the virtual state of the palm is represented by separating or combining fingers or bending a finger. If the system knows the rough shape of the touch object in advance, for example, knowing in advance that the user will put a hand on the screen by the presetting, it could judge the rough gesture of the hand according to the touch image on the plane. For example in FIG. 19, the user bends the forefinger of his left hand, since the touch image between forefinger 4 and palm 11 is discontinuous. The system enables continuous pressing by shaking from left to right sides. For example, the user can touch the screen with his lateral surface of his hand, and keep in contact with the touch screen, then press touch screen forcibly, with the palm swinging quickly on the plane for the palm; in the process of swinging, the lateral surface of hand can exit the touch screen temporarily. This action could control the virtual palm to make downward cut along the lateral surface.

The system can confirm the thickness of the generated objects according to the pressure of the hand's various parts or the height on Z-axis. For example, the user can increase the pressure of the right palm to lower the right side of the generated 3D object on Z-axis.

In FIG. 19, the user controls the gesture of the palm generated by the touch image of the left hand based on the angle formed by the finger 16, thumb 6 of the right hand and the whole palm with X-axis. Rotation of the right hand on the screen could control the rotation angle of the virtual palm in relation to the user's left hand based on axle y, the thumb is used to control its rotation angle in relation to the user's left hand based on axle x, and other 4 fingers are used to control the rotation angle perpendicular to axle z of the plane for the screen.

The generated virtual object may not be a virtual shape of hand, since it can be transformed into other shapes with certain parameters. The touch image can be transformed according to certain parameters and then a virtual object will be formed accordingly. Also, the 3D object generated on the basis of original touch image shall be subject to transformation and mapping according to certain parameters. Other touch objects can be used to provide touch image beside the hands.

### 13, Touch command editor

The user can define the touch commands by themselves if the actions of hands are separated into a series of standardized ones.

For example, according to a classification method:
The touch commands are divided into several segments of time, allowing to define the time periods separately; a touch command can be composed of several time segments.

Every hand can be divided into multiple parts:
Lower edge of the palm, whole hand, little finger, ring finger, middle finger,, forefinger, thumb, little fingertip, ring fingertip, middle fingertip, fore fingertip, thumb tip, center of palm, lateral surface of hand. The palm and its center can be divided into left and right parts, and the hand's lateral surface divided into fingers and palm.

The system identifies various parts of the hand according to diagram identification and the relative position of various touch points.

There are standardized actions for every part: the standardized actions of finger and fingertips are: non-involvement in touching, gliding along X-axis or Y-axis, gliding to nearby fingers, rapping the screen and the number of raping, pressing the screen and the order of pressing, duration, in-situ rotation, gliding along the self-defined direction, gliding along specific track on the screen; the tracks include: circle, oval, triangle, trapezoid, parallelogram, pentagon, zigzag and self-defined ones; the user could define with drawing tools, and form new tracks with standardized diagram, polygonal line, straight line and curve.

The angle formed with X-axis and Y-axis can be used to describe rotation and gliding as well as their tracks.

The standardized actions of palm, lower edge of the palm and the middle of the palm are: non-involvement in touching, gliding along X-axis or Y-axis, gliding to nearby fingers, rapping the screen and the number of raping, pressing the screen and the order of pressing, duration, in-situ rotation, gliding along the self-defined direction, gliding along specific track on the screen; the tracks include: circle, oval, triangle, trapezoid, parallelogram, pentagon, zigzag and self-defined track; the user could define with drawing tools, and form new tracks with standardization diagram, polygonal line, straight line and curve.

The user could define the touch commands in the form of encoding.

Such formats could be adopted: time period, which hand, which part of the hand and what action.

Some touch commands are not restricted by the fingers performing the touch commands, which could be described in this way: a certain finger or palm, lower edge of the palm, which fingers are used from the middle of the palm to the left, right and top.

The actions and parts of the hand can be encoded, for example, capital letters represent the parts of the hand, A for thumb, small letters represent the actions, numbers represent the track, such as: a for sliding, 2 for clockwise oval track, so sliding along clockwise oval track is a2, brackets can be added to prevent confusion. Time period means the time when an action occurs, for example, if two actions are set in the same time period, this means they occur at the same time.

It can also be defined by the user in the way of menu selection, which enables more convenient and straightforward operation. As shown in FIG 20, 71 represents the menus and 72 represents the buttons.

Because of standardization, the user could give some simple touch commands with the keyboard, thus realizing seamless operation of touch command and the keyboard.

Similarly, the touch command could also be completed with the guide of the system by means of identification.

For the purpose of system identification, the user completes the touch command step by step according to the time periods suggested by the system.

### 14, Multi-attack command.

After issuing a command against an object, new commands will be issued and the priority over previous one will be set. For example, if a tank is ordered to fire at one target after ordering it to move in a game, you can set the priority of firing over movement. And then you could order it to avoid one section, so you can set the priority of avoidance over firing and movement.

### 15, Touch engine

According to the pressure of the touch image of the user (especially the touch image of the hand), as well as other preset parameters, a corresponding object which can be processed by physical and special engines will be formed, so that the touch effects of the user could be subject to the physical and special engines, thus generating various touch effects. A serious of default parameters should be set in the system for use when the hand and other touch tools are not provided with other parameters. The generated virtual objects are not required to be shown, since they're just generated to transform the touch information into information that can be disposed by physical or other engines. For example, the strength of the touch pressure decides the extent that the generated objects move in small scope on Z axle in a 3-dimension plane, or the pressure on other objects, or the strength of certain parameter in the game. For example, there's a parameter of "energy density", and the pressure corresponds to the energy density of the generated virtual objects, the higher pressure mean bigger energy density, or the energy strength it release to other objects will be stronger. For example, in the game, if the user picks an excavator, the system will set the physical material of the excavator according to that of the object generated from the finger's touch image, confirm its pressure against the ground and digging depth according to the touch pressure, and confirm its contact area with the earth according to the touch image. At this moment, the user could perform the action of excavation by pressing the earth in the game or hitting other objects, like tank without presetting, thus decreasing the workload of the game maker greatly.

The touch engine can also confirm the thickness of the generated objects on axle Z according to the touch pressure of the user. An object which can be disposed by physical and 3D engines will be formed according to the touch image of the user and the touch pressures of the touch image at different positions. Touch pressure can be used to confirm the thickness of generated objects and the height on the axle Z. The area on the plane of X,Y is proportional to axle Z of the user's touch image, but not necessarily perpendicular to the plane of the touch screen, but only perpendicular to X, Y planes set in certain conditions.

If a touch screen of 3D sensing capability is used, for example, the field induction type touch screen that can sense the touch objects within a certain distance of the touch screen, a virtual object can be generated to move on axle Z of a 3D plane according to the changes of the distance between the object and the screen.

In the present invention, the actions suitable for manual operation are suitable for touch screen's operating tools, and vice versa. The different parts of the hand, and different combinations of body components, for example, a finger or two fingers combined together, the palm and fingers of a hand, touch the screen at the same time or a whole hand touches the touch screen, which can be regarded as different operating tools; many operations can be set to only respond to specific touch objects or those in specific positions. Many operations could only be triggered by specific touch objects. For example, the menus are set to be called only when the fingers and palm touch the screen at the same time and rotate the fingers with the palm as the center.

In a multi-touch environment, various parts of a hand could correspond to the icons via Bio-interface. Icons don't need to correspond to the fingers one by one, which means one icon can correspond to the actions of two fingers; what a icon corresponds to is the parts of a hand, not definitely a single part of the hand, for example, the system could show two-stage menus simultaneously via Bio-interface, of which the primary menu slides correspondingly along with two or more fingers or the whole hand to the same direction, so as to switch among different options, while the icons of the secondary menu correspond to each finger. Markings don't need to occur nearby the corresponding positions. For example, in order to concentrate the user's attention, they may occur nearby the position where the user is observing.

In the present invention, the hand is considered as an operating tool, while various operations and commands issued by the hands in each parts of the present invention can be applied to any other parts of the present invention, thus performing any functions according to the program's settings.

The patterns of menus and options and selection modes, etc, mentioned in the present invention can be universally used in any other parts for any function.

In multi-object collaborative operation, especially multi-touch point collaborative operation, it's possible to use various modes and interactive methods of selecting objects in selection and confirmation, as well as any menu, Biointerface and free icons, etc provided in the present invention.

The menu patterns and various interface elements of the present invention, such as: icon containers, can also be used in single-point touch beside multi-touch operation.

The methods and forms of free icons in guiding the users, for example, icon splitting, and the patterns of icons corresponding to the functions when sliding towards various directions by the user's fingers, can be applied to various operating options and markings.

By means of other methods, the system could realize simultaneous picking of multiple objects and then utilization of the interface and options provided by the present invention, as well as the operations performed, etc, within the scope of the present invention.

Through multiple groups of touch points, especially two hands picking different positions corresponding to multiple groups of touch points, the same kind of picking only contains the information of several positions and the sequence with more abundant structure. A series of operations available for picking, including: locking, calling menus, various pick modes and various patterns of menus as well as further operations available are contained within the scope of the present invention.

In the present invention, the objects include all elements of graphical interface: icons, a certain region, window, image, shortcut, touch point and touch object, etc.

Touch point is not merely a point, but also presents the touch image of the touch point or the touch region covered by the touch image.

In the present invention, option, slider, free icon, icon container and menu can be regarded as one of the icons; the icons mentioned in the present invention include above-specified objects.

If the system can not confirm the sole operation intention of a user when he/she selects multiple objects and divides the objects or regions into different groups according to relevant ways, the options shall be given to the user for selecting which kind of operation is to be performed.

As for the same group of object, different operations correspond to different commands, especially when calling different menus.

In the present invention, various operations available by the touch objects, as well as multiple touch objects and combinations of multiple operations are collectively called as touch commands, including but not limited to:
Sliding on the screen with different tracks;
Exiting the screen;
Touching the screen;
Pressing the screen;
Multiple pressing the screen;
Rapping screen;

Combination of aforementioned operations performed simultaneously by multiple touch objects.

Different operating sequences, touch objects and touch commands, especially selection sequences for multiple groups of objects, correspond to different operations calling different menus.

The icons of Biointerface may appear firstly, rather than after being touched by the touch objects including body components.

Free icons, control zones, shortcuts and menus' options. Common icons, etc, can correspond to certain functional images and objects as common features; it's understood that, in the present invention, operations and utilization of a certain object can be expanded to other objects.

In the present invention, operations of selected objects are suitable for the objects confirmed but not yet selected, and vice versa. Confirmation and selection represent only two different states.

The embodiments provided in the present invention under various grouping modes are explanatory and not restrictive; there may be different logic relationships between two objects or even inverse relationship in the embodiments.

Multiple objects are distributed on multiple screens, and various contents provided in the present invention are used within the scope of the present invention.

For example: the program icons of compression software, etc, are put on a screen, and other files on another screen for multi-touch collaborative operation; touch points on a screen are used for selecting a position, or stylus pen on another screen used for writing. The contents of writing become the annotations, etc, of the positions selected by the fingers within the scope of the present invention.

Any operating methods provided in the present invention can be used to trigger various events provided in the present invention.

## Claims

1. A method for confirming regions or objects within the regions according to the touch images and profile formed by the touch images.

2. A set of menus suitable for multi-point touch environment, which is **characterized by** that, the touch points for calling menus disappear, and the menus disappear when there are no touch points on menus for operation of the menus.

3. An icon, which is available with one or more of the following characteristics: after the icons are activated, moving icons to different directions will correspond to different functions; graphical markings will appear under or nearby the relevant fingers or nearby the touch points, guiding the fingers or touch points to slide towards different directions and select or use different functions; after icons are activated, graphical markings will appear under or nearby the fingers of corresponding hand; and these graphical markings will move along with the corresponding touch points or body components, such as: fingers, thus keeping the relative position unchanged.

4. An interface, which is available with one or more of the following characteristics: the system could, according to the position of one or more touch points, and in combination with the touch points' touch images and presettings, confirm the easy-to-operate positions or regions of other parts of the hand for the touch objects corresponding to the touch points; icons and slider, etc, will directly appear or move to the relevant regions or positions, conform to the profile of corresponding regions or positions for easier manual operation by the user; the icons of interface will, according to the position of fingers touching the screen, confirm their arrangements, so that the icons are located at the easy-to-touch positions under or nearby the relevant fingers; the icons of interface correspond to various parts of the hands, or the easy-to-touch regions or positions nearby or under various parts.

5. A structure for confirming the relationship among various touch points and selected regions or positions or objects, which permits to group various touch points and the objects selected or confirmed by the touch points; the user and programmer could, according to this structure, define the relationship among various touch points and selected regions or positions or objects, so as to fully utilize the operating information; it's **characterized by** that, the objects are grouped by one or more of the following methods: according to the touch objects or touch images of selected regions or positions or objects; according to the method for selecting objects or regions or positions; by selecting or confirming one or more objects or regions or positions with one or more touch points, then keep one or more touch points not completely exit the confirmed or selected objects; by confirming the functions of subsequent other touch points as well as the effect and position of operation to execute or be executed by the objects selected by other touch points; by grouping the touch points and the objects selected by the touch points according to the hands for the touch points.

6. A mode for collaborative operation of touch tools and hands, which is **characterized by** that, the functions of the touch tools are controlled by hands when the touch tools and hands touch the screen simultaneously.

7. A program structure, which is **characterized by** that, according to the touch images, touch pressure and the distance between touch objects and the screen, the corresponding virtual objects and their parameters and their positions in the virtual space are generated, and then transferred to the physical engines and special effects engine, etc, for real-time generation of the touch effects.

8. A method based on multi-touch control and generation of 3D objects, which is **characterized by** that, the basic shape of 3D objects are generated based on the touch images and other preset parameters. Then the shape will be controlled in order to confirm the desired 3D objects and their spatial locations.

9. A self-defined touch command editor, which is **characterized by** that, the touch operation is decomposed into standardized actions in several time periods, so the user could define the touch commands based on the standardized actions.

10. An intellectual menu, which is **characterized by** that, when multiple selected objects include programs and objects that can be opened by programs, the options to open the relevant files by using the programs are given.
